(19) Europäisches Patentamt
European Patent Office
Office européen des brevets

(11) EP 3 632 948 A1

(12) EUROPEAN PATENT APPLICATION

(43) Date of publication:
08.04.2020 Bulletin 2020/15

(21) Application number: 18198618.3

(22) Date of filing: 04.10.2018

(51) Int Cl.:
C08G 18/76 (2006.01)
C08G 18/10 (2006.01)
C08G 18/42 (2006.01)
C08G 18/67 (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicants:
- BASF SE
  67056 Ludwigshafen am Rhein (DE)
- Albert-Ludwigs-Universität Freiburg
  79098 Freiburg (DE)

(72) Inventors:
- Bruchmann, Bernd
  67056 Ludwigshafen am Rhein (DE)
- Zarbakhsh, Sirus
  67056 Ludwigshafen am Rhein (DE)
- Nabarun, Roy GMP/LT
  48192 MI Wyandotte (US)
- Rowlett, Jarrett
  Schumburg, IL 60194 (US)

(74) Representative: Altmann Stößel Dick
Patentanwälte PartG mbB
Isartorplatz 1
80331 München (DE)

# (54) THERMALLY REVERSIBLE CROSSLINKING STRATEGY FOR THERMOPLASTIC POLYURETHANE

(57) The invention relates to a thermoplastic polyurethane obtained or obtainable by reaction of at least the compounds (i) to (iv): (i)a polyol composition comprising at least one polyol which has at least two functional hydroxyl groups reactive to isocyanate and which has within its structure at least one structural element according to formula (I), (ii) a polyisocyanate composition; (iii)a diene composition comprising at least one anthracene compound of general formula (II); and (iv) optionally a chain extender composition comprising at least one diol;(v) optionally a polyol composition comprising at least one polyol different from (i) and having two hydroxyl groups reactive towards isocyanate; as well as to a method for preparation of said thermoplastic polyurethane and to a thermoplastic polyurethane obtained or obtainable according to the method. The invention further relates to a polyol obtained or obtainable by reaction of at least the compounds (i.1) and (i.2): (i.1) a compound according to formula (II); and (i.2) at least one diol HO-$(CH_2)_p$-OH, wherein p is an integer in the range of from 2 to 10. Furthermore, the invention relates to a method for preparation of said polyol and to the polyol obtained or obtainable according to this method. The invention also relates to the use of said polyol or of the polyol obtained or obtainable according to the method for the preparation of thermoplastic polyurethane. Further, the invention relates to the use of the thermoplastic polyurethane or of the thermoplastic polyurethane obtained or obtainable according to the method for the preparation of a molded article, an injection molded article, an extrusion article, or a foil.

EP 3 632 948 A1

## Description

The invention relates to a thermoplastic polyurethane obtained or obtainable by reaction of at least the compounds (i) to (iv): (i)a polyol composition comprising at least one polyol which has at least two functional hydroxyl groups reactive to isocyanate and which has within its structure at least one structural element according to formula (I), (ii) a polyisocyanate composition; (iii)a diene composition comprising at least one anthracene compound of general formula (II); and (iv) optionally a chain extender composition comprising at least one diol;(v) optionally a polyol composition comprising at least one polyol different from (i) and having two hydroxyl groups reactive towards isocyanate; as well as to a method for preparation of said thermoplastic polyurethane and to a thermoplastic polyurethane obtained or obtainable according to the method. The invention further relates to a polyol obtained or obtainable by reaction of at least the compounds (i.1) and (i.2): (i.1) a compound according to formula (II); and (i.2) at least one diol HO-$(CH_2)_p$-OH, wherein p is an integer in the range of from 2 to 10. Furthermore, the invention relates to a method for preparation of said polyol and to the polyol obtained or obtainable according to this method. The invention also relates to the use of said polyol or of the polyol obtained or obtainable according to the method for the preparation of thermoplastic polyurethane. Further, the invention relates to the use of the thermoplastic polyurethane or of the thermoplastic polyurethane obtained or obtainable according to the method for the preparation of a molded article, an injection molded article, an extrusion article, or a foil.

Thermoplastic polyurethane (TPU) is a material which has to be kept in the thermoplastic regime in order to keep it processible for the application such as extrusion, molding or foil preparation; these applications normally been done at about 200°C or higher temperatures. However, there is a need to improve mechanical properties of TPU at temperatures where the educts and the final products are handled and in use respectively, for example at room temperature (25 °C). Representative mechanical properties are for example compression set, creep and chemical resistance. One option to improve these properties with respect to polymers is crosslinking. However, conventional cross linking of TPU has an inherent drawback since extensive cross-linking will lead to the formation of a thermoset. Thus, the cross-linking density has to be optimized to keep the material processible within thermoplastic regime. However, use of very little external cross-linker would also not bring any appreciable positive influence towards the improvement of material properties. Thus, cross-linking even though is a known route for improvement of material properties, owing to the processibility restriction it is generally not implemented for TPU. Only for special cases where post crosslinking is permissible, an additional crosslinker is added before the final extrusion or injection molding process. This would be an additional cross-linking post-processing step at the site of final product formation, which would essentially increase the processing cost and in turn also the final price of the product. In the PU field, reversible crosslinking via Diels-Alder reaction is known. For example, C. Lakatos et al. describe shape memory crosslinked polyurethanes containing thermoreversible Diels-Alder couplings.[1] The reversible Diels-Alder bonds were obtained by the reaction of diisocyanate-ended prepolymers with furfurylamine (FA) followed by the addition of bismaleimide (BMI). However, permanent crosslinks between the linear chains containing DA bonds were achieved using additional amounts of diisocyanates (MDI or HDI).

A possible route for TPUs, which should be in the thermoplastic regime at the processing temperature, would be the use of a reversible crosslinking, which would not only impart the benefits of conventional crosslinking but also avoid the post crosslinking step. For example, L. Irusta et al. describe polyurethanes based on isophorone diisocyanate trimer and polypropylene glycol crosslinked by thermal reversible diels alder reactions based on FA and BMI.[2] The obtained polymers exhibited thermosetting properties at room temperature, and thermoplastic behavior at high temperatures; however, the retro-DA reaction already started dominating at 80 °C, which is much to low in view of TPU processing conditions.

Therefore, it was an object of the present invention to provide a thermoplastic polyurethane having improved mechanical properties at room temperature but being thermoplastically processible at temperatures above 200 °C.

According to the present invention, this object was solved by a thermoplastic polyurethane (TPU) obtained or obtainable by reaction of at least the compounds (i) to (iv):

(i) a polyol composition comprising at least one polyol which has at least two functional hydroxyl groups reactive to isocyanate and which has within its structure at least one structural element according to formula (I)

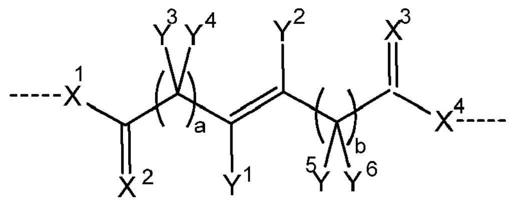

(I),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(ii) a polyisocyanate composition;
(iii) a diene composition comprising at least one anthracene compound of general formula (II)

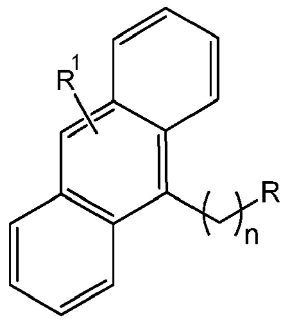

(II)

wherein n is an integer in the range of from 1 to 20; $R^1$ is selected from the group of hydrogen atom and C1 to C3 alkyl group; and
R represents either

- $-O-[C(=O)]_r-$ oligo- or polymer chain having at least two terminal functional groups $Z^1$ and $Z^2$, wherein r is zero or 1 and $Z^1$ and $Z^2$ are independently selected from the group consisting of methyl group, ethyl group, hydroxyl group, amino group, vinyl group, acryl group and isocyanate group;
  or
- $-O-C(=O)-(CH_2)_m-C(=O)-O-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;
  or
- $-NH-C(=O)-(CH_2)_m-C(=O)-NH-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;

(iv) optionally a chain extender composition comprising at least one diol;
(v) optionally a polyol composition comprising at least one polyol different from (i) and having two hydroxyl groups reactive towards isocyanate.

For R in the at least one anthracene compound of general formula (II) being $-O-[C(=O)]_r-$ oligo- or polymer chain having at least two terminal functional groups $Z^1$ and $Z^2$ with r, $Z^1$ and $Z^2$ as defined above, the oligo- or polymer chain has a substituent A, which is selected from hydrogen atom and anthracene ring, wherein the anthracene ring of A has at least one substituent $R^2$ which is selected from the group of hydrogen atom and C1 to C3 alkyl group, If A is a hydrogen atom, the diene composition according to (iii) comprises are at least two anthracene compounds of general formula (II). In these embodiments, the anthracene rings of the at least two anthracene compounds of general formula (II) or the two anthracene rings of the at least one anthracene compounds of general formula (II) together act as a bis-anthracene compound in the reaction with the polyol of the polyol composition according to (i).
Regarding the at least one anthracene compound of general formula (II), one or more residues $R^1$ may be present, which may be the same or different.
Surprisingly, it could be shown that the resulting TPU showed reversible crosslinking at temperatures above 200 °C, i.e. above 220 °C or 230 °C depending on the degree of crosslinking. Additionally, the mechanical performance of the TPU and creep performance were improved at elevated temperature.
According to one embodiment of the thermoplastic polyurethane, the at least one polyol of the polyol composition (i) which has within its structure at least one structural element according to formula (I) is obtained or obtainable by

reaction of at least the compounds (i.1) and (i.2):

(i.1) a compound according to formula (III)

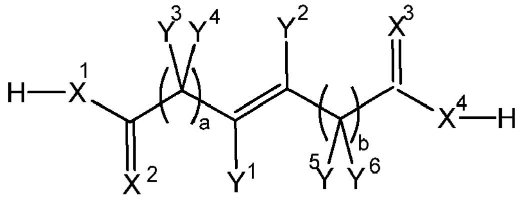

(III),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_p-OH$, wherein p is an integer in the range of from 2 to 10, preferably in the range of from 4 to 6.

According to one embodiment of the thermoplastic polyurethane, the at least one polyol of the polyol composition (i) which has within its structure at least one structural element according to formula (I) is obtained or obtainable by reaction of at least the compounds (i.1), (i.2) and (i.3) and optionally (i.4):

(i.1) a compound according to formula (III)

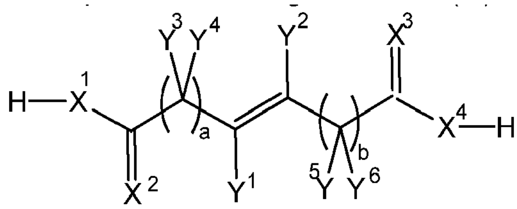

(III),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_{p1}-OH$, wherein $p_1$ is an integer in the range of from 2 to 10, preferably in the range of from 4 to 6;
(i.3) at least one saturated dicarboxylic acid $HOOC-(CH_2)_q-COOH$, wherein q is an integer in the range of from 1 to 20, preferably in the range of from 4 to 10, more preferably in the range of from 4 to 8, more preferably 6;
(i.4) optionally at least one further diol $HO-(CH_2)_p{}^2-OH$, wherein $p^2$ is an integer in the range of from 2 to 10, preferably in the range of from 4 to 6, wherein $p^2$ is not identical to $p^1$.

According to one embodiment of the thermoplastic polyurethane, in the compound according to formula (III) of (i.1) $X^1$, $X^2$, $X^3$ and $X^4$ are oxygen atoms. According to one embodiment of the thermoplastic polyurethane, in the compound according to formula (III) of (i.1) the integers a and b are both zero. According to one embodiment of the thermoplastic polyurethane, in the compound according to formula (III) of (i.1) the electron withdrawing group(s) is/are selected from the group consisting of halogen atom, wherein the halogen atom is preferably selected from the group consisting of fluorine atom, chlorine atom, bromine atom and iodine atom; -OH; $-NO_2$; $-NH_2$; -COOH and -CN. According

to one embodiment of the thermoplastic polyurethane, in the compound according to formula (III) of (i.1) $Y^3$, $Y^4$ $Y^5$, $Y^6$ are all hydrogen atoms and/or wherein $Y^1$, $Y^2$ are both hydrogen atoms. According to one embodiment of the thermoplastic polyurethane, the compound according to formula (III) of (i.1) is maleic acid or fumaric acid.

According to (ii) a polyisocyanate composition is used. The polyisocyanate composition (ii) comprises at least one polyisocyanate. As polyisocyanates it is possible to use aliphatic, cycloaliphatic, araliphatic and/or aromatic diisocyanates. Specific examples include the following aromatic isocyanates: 2,4-toluene diisocyanate, mixtures of 2,4- and 2,6-toluene diisocyanate, 4,4'-, 2,4'- and/or 2,2'-diphenylmethane diisocyanate (MDI), mixtures of 2,4'- and 4,4'-diphenylmethane diisocyanate, urethane-modified liquid 4,4'- and/or 2,4-diphenylmethane diisocyanates, 4,4'-diisocyanatodiphenylethane, the mixtures of monomeric methanediphenyl diisocyanates and more highly polycyclic homologues of methanediphenyl diisocyanate (polymeric MDI), 1,2- and 1,5-naphthylene diisocyanate. Aliphatic diisocyanates used are customarily aliphatic and/or cycloaliphatic diisocyanates, examples being tri-, tetra-, penta-, hexa-, hepta- and/or octamethylene diisocyanate, 2-methylpentamethylene 1,5-diisocyanate, 2-ethylbutylene 1,4-diisocyanate, 1-isocyanato-3,3,5-trimethyl-5-isocyanatomethylcyclohexane (isophorone diisocyanate, IPDI), 1,4- and/or 1,3-bis(isocyanatomethyl)cyclohexane (HXDI), 1,4-cyclohexane diisocyanate, 1-methyl-2,4- and/or -2,6-cyclohexane diisocyanate, 4,4'-, 2,4'- and/or 2,2'-dicyclohexylmethane diisocyanate. A particularly preferred polyisocyanate is MDI.

According to one embodiment of the thermoplastic polyurethane, the anthracene compound of general formula (II) according to (iii) has the general formula (IIa)

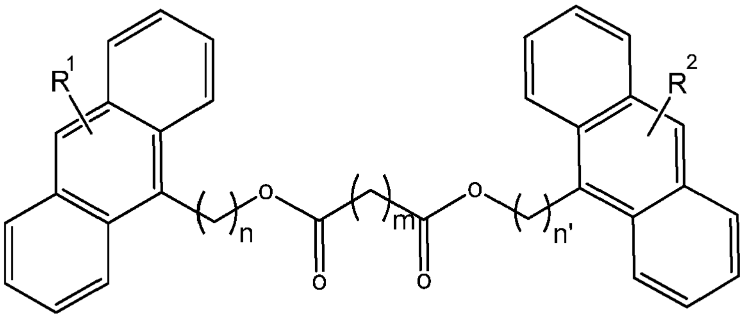

(IIa)

wherein n and n' are each independently an integer in the range of from 1 to 20, preferably in the range of from 1 to 5; m is an integer in the range of from 2 to 20, preferably in the range of from 2 to 10; and $R^1$ and $R^2$ are independently selected from the group of hydrogen atom and C1 to C3 alkyl group.

According to another embodiment of the thermoplastic polyurethane, the anthracene compound of general formula (II) according to (iii) has the general formula (IIb)

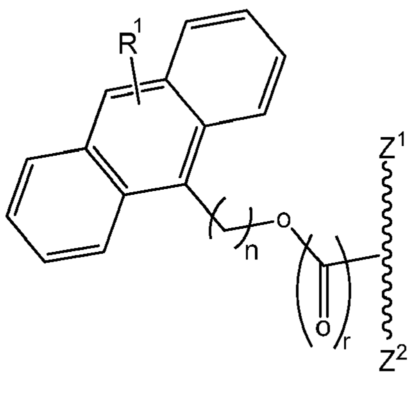

(IIb),

wherein

the sinous line represents an oligomeric chain or a polymeric chain comprising $-(CH_2)_s-$ units,$-(CH_2-CH_2-O)_s-$ units or $-(CH_2-CH_2-CH_2-O-)_s-$ units, wherein s is an integer in the range of from 2 to 50;

$Z^1$ and $Z^2$ are independently selected from the group consisting of methyl group, ethyl group, hydroxyl group, amino group, vinyl group, acryl group and isocyanate group; n is an integer in the range of from 1 to 20, preferably in the range of from 1 to 10; r is zero or 1; and

$R^1$ is selected from the group of hydrogen atom and C1 to C3 alkyl group, wherein the anthracene compound of

general formula (IIb) is preferably reactive or unreactive substrate reactive towards isocyanate or hydroxyl group and is preferably a meltable solid or a liquid with viscosity of 100-1900 mPas at 75°C.

The C atom of $(C{=}O)_r$ or, if r is zero, the oxygen atom of $(CH_2)_{n}$-O is connected by a single bond to a C atom within one of the $CH_2$, $CH_2$-$CH_2$-O or $CH_2$-$CH_2$-$CH_2$-O units, i.e. in one of these units a hydrogen atom is replaced by the bond to the C atom of the $(C{=}O)_r$ group and the oxygen atom of the $(CH_2)_n$-O respectively.

According to another embodiment of the thermoplastic polyurethane, the anthracene compound of general formula (II) accordin to (iii) has the general formula (IIb-1)

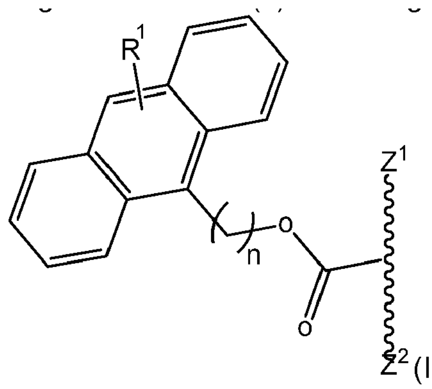

(IIb-1),

wherein

the sinous line represents an oligomeric chain or a polymeric chain comprising $-(CH_2)_s-$ units,$-(CH_2-CH_2-O)_s-$ units or $-(CH_2-CH_2-CH_2-O-)_s-$ units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10; and
$R^1$ is selected from the group of hydrogen atom and C1 to C3 alkyl group, wherein the anthracene compound of general formula (IIb-1) is preferably reactive or unreactive substrate reactive towards isocyanate or hydroxyl group and is preferably a meltable solid or a liquid with viscosity of 100-1900 mPas at 75°C.

According to another embodiment of the thermoplastic polyurethane, the anthracene compound of general formula (II) according to (iii) has the general formula IIb-2

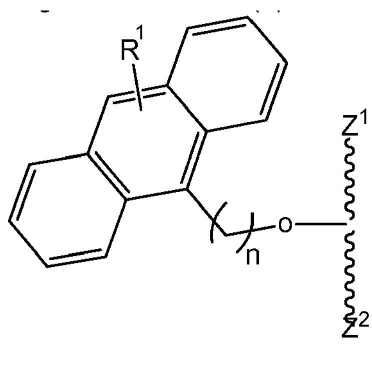

(IIb-2),

wherein

the sinous line represents an oligomeric chain or a polymeric chain comprising $-(CH_2)_s-$ units,$-(CH_2-CH_2-O)_s-$ units or $-(CH_2-CH_2-CH_2-O-)_s-$ units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10; and
$R^1$ is selected from the group of hydrogen atom and C1 to C3 alkyl group, wherein the anthracene compound of

general formula (IIb-2) is preferably reactive or unreactive substrate reactive towards isocyanate or hydroxyl group and is preferably a meltable solid or a liquid with viscosity of 100-1900 mPas at 75°C.

According to (iv), optionally a chain extender composition comprising at least one diol is used. Generally, any diol can be used in the context of the present invention. The at least one diol of the chain extender composition can be selected from aliphatic, araliphatic, aromatic, and/or cycloaliphatic compounds with a molar mass of from 0.05 kg/mol to 0.499 kg/mol, preferably alkanediols having from 2 to 10 carbon atoms in the alkylene moiety, di-, tri-, tetra-, penta-, hexa-, hepta-, octa-, nona-, and/or decaalkylene glycols having from 3 to 8 carbon atoms, in particular ethylene 1,2-glycol, 1,3-propanediol, 1,4-butanediol, 1,6-hexanediol, and preferably corresponding oligo- and/or polypropylene glycols such as diethylene glycol, dipropylene glycol, 1,4-cyclohexanediol, 1,4-dimethanolcyclohexane, and neopentyl glycol, and it is also possible here to use a mixture of the chain extenders. It is preferable that the diols used have only primary hydroxy groups, and very particular preference is given to $HO-(CH_2)_t-OH$, wherein t is an integer in the range of from 2 to 10, preferably in the range of from 4 to 6, preferably 4.

According to (v), optionally a polyol composition comprising at least one polyol different from (i) and having two hydroxyl groups reactive towards isocyanate is used. Polyols are known to the skilled person.[3]

According to one embodiment of the thermoplastic polyurethane, the polyol composition (v) comprising at least one polyol different from (i) and having two hydroxyl groups reactive towards isocyanate comprises at least one polyester diol or at least one polyether diol. Suitable polyether diols are for example polyether diols based on ethylene oxide or propylene oxide or mixtures thereof, for example copolymers such as blockcopolymers. The ratio of ethylene oxide units to propylene oxide units can vary in wide ranges, the ratio of ethylene oxide units to propylene oxide units can for example be in the range of from 50:50 to 95:5, preferably in the range of from 60:40 to 90:10, more preferred in the range of from 70:30 to 85:15, in particular preferred in the range of from 75:25 to 80:20. The molecular weight of the polyether diols used in the present invention is for example in the range of from 1000 to 4000 Dalton (g/mol), preferably in the range of from 1500 to 3000 Dalton, more preferred in the range of from 2000 to 2500 Dalton. Suitable polyester diols can by way of example be produced from organic dicarboxylic acids having from 2 to 12 carbon atoms, preferably aromatic dicarboxylic acids having from 8 to 12 carbon atoms, and from polyhydric alcohols, preferably diols, having from 2 to 12 carbon atoms, preferably from 2 to 6 carbon atoms. Examples of dicarboxylic acids that can be used are: succinic acid, glutaric acid, adipic acid, suberic acid, azelaic acid, sebaic acid, decanedicarboxylic acid, maleic acid, fumaric acid, and phthalic acid, isophthalic acid, terephthalic acid, and the isomeric naphthalenedicarboxylic acids. The dicarboxylic acids can be used either individually or else in a mixture with one another. Instead of the free dicarboxylic acids it is also possible to use the corresponding dicarboxylic acid derivatives, for example dicarboxylic esters of alcohols having from 1 to 4 carbon atoms, or dicarboxylic anhydrides. Examples of di- and polyhydric alcohols, in particular diols, are ethanediol, diethylene glycol, 1,2- and 1,3-propanediol, dipropylene glycol, 1,4-butanediol, 1,5-pentanediol, 1,6-hexanediol, 1,10-decanediol, glycerol, and trimethylolpropane, preferably ethylene glycol, 1,3-propanediol, methyl-1,3-propanediol, 1,4-butanediol, 3-methyl-1,5-pentanediol, or 1,6-hexanediol.

According to one embodiment of the thermoplastic polyurethane, the polyol composition (v) comprising at least one polyol different from (i) and having two hydroxyl groups reactive towards isocyanate comprises at least one polyester diol different from (i), more preferably at least one polyester diol based on adipate ester with 1,6-hexane diol and 1,4-butane diol.

According to one embodiment of the thermoplastic polyurethane, the diene composition (iii) is used in an amount in the range of from 1-80 weight-%, preferably in the range of from 1-50 weight-%, more preferably in the range of from 1-30 weight-%, based on the overall weight of the components (i) to (iii) or (i) to (iv) or (i) to (v).

According to one embodiment of the thermoplastic polyurethane, the molar ratio anthracene compound of general formula (II) according to (ii) : at least one polyol according to (i) is in the range of from 10:1 to 1:10, preferably in the range of from 5:1 to 1:5, more preferred in the range from 2:1 to 1:1, more preferred in the range from 1.5:1 to 1:1.5, more preferred in the range from 1.2:1 to 1:1.2, more preferred in the range from 1.1:1 to 1:1.1, more preferred 1:1.

According to one embodiment of the thermoplastic polyurethane, the at least one polyol according to (i) which has within its structure at least one structural element according to formula (I) is obtained or obtainable by reaction of at least the compounds (i.1) and (i.2), wherein (i.1) and (i.2) are reacted in a molar ratio (i.1):(i.2) in the range of from 1:100 to 100:1, preferably in the range of from 5:95 to 50:50, more preferred in the range of from 10:90 to 40:60, based on the complete weight of (i.1) and (i.2).

According to one embodiment, the thermoplastic polyurethane is obtained or obtainable by reaction of at least the compounds (i) to (iv):

(i) a polyol composition obtained or obtainable by reaction of at least the compounds (i.1) to (i.4):

(i.1) fumaric acid;
(i.2) 1,4-butane diol;

(i.3) adipic acid;
(i.4) 1,6-hexane diol;

(ii) a polyisocyanate composition comprising at least MDI;
(iii) a diene composition comprising at least bis(9-anthrylmethyl)-ester of succinic acid;
(iv) optionally a chain extender composition comprising at least 1,4-butane diol.

The polyol

The invention also relates to a polyol obtained or obtainable by reaction of at least the compounds (i.1) and (i.2):

(i.1) a compound according to formula (II)

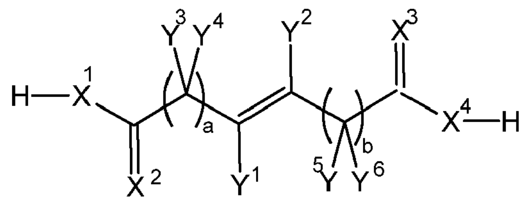

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group; ;

(i.2) at least one diol HO-$(CH_2)_p$-OH, wherein p is an integer in the range of from 2 to 10, preferably in the range of from 4 to 6.

According to one embodiment, polyol is obtained or obtainable by reaction of at least the compounds (i.1), (i.2) and (i.3) and optionally (i.4):

(i.1) a compound according to formula (II)

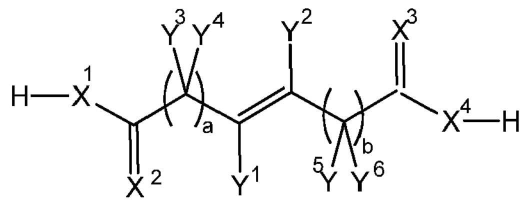

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol HO-$(CH_2)_{p1}$-OH, wherein $p^1$ is an integer in the range of from 2 to 10, preferably in the range of from 4 to 6;
(i.3) at least one saturated dicarboxylic acid HOOC-$(CH_2)_q$-COOH, wherein q is an integer in the range of from 1-20, preferably in the range of from 4 to 10, more preferably in the range of from 4 to 8, more preferably 6;
(i.4) optionally at least one further diol HO-$(CH_2)_p{}^2$-OH, wherein $p^2$ is an integer in the range of from 2 to 10, preferably

in the range of from 4 to 6, wherein $p^2$ is not identical to $p^1$.

According to one embodiment of the polyol, the compound according to formula (II) of (i.1) $X^1$, $X^2$, $X^3$ and $X^4$ are oxygen atoms. According to one embodiment of the polyol, in the compound according to formula (II) of (i.1) the integers a and b are both zero. According to one embodiment of the polyol, in the compound according to formula (II) of (i.1) the electron withdrawing group(s) is/are selected from the group consisting of halogen atom, wherein the halogen atom is preferably selected from the group consisting of fluorine atom, chlorine atom, bromine atom and iodine atom; -OH; $-NO_2$; $-NH_2$; -COOH and -CN. According to one embodiment of the polyol, in the compound according to formula (II) of (i.1) $Y^3$, $Y^4$ $Y^5$, $Y^6$ are all hydrogen atoms and/or wherein $Y^1$, $Y^2$ are both hydrogen atoms. According to one embodiment of the polyol, the compound according to formula (II) of (i.1) is maleic acid or fumaric acid.

According to one embodiment, the polyol is obtained or obtainable by reaction of at least the compounds (i.1), (i.2), (i.3) and (i.4):

(i.1) fumaric acid;
(i.2) 1,4-butane diol;
(i.3) adipic acid;
(i.4) 1,6-hexane diol.

The method for preparation of a polyol

The present invention further relates to a method for preparation of a polyol by reacting at least the compounds (i.1) and (i.2)

(i.1) a compound according to formula (II)

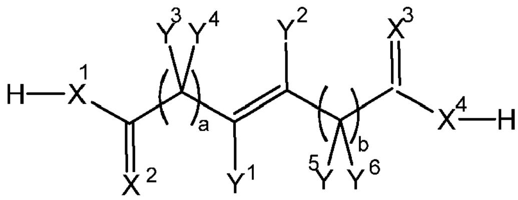

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_p-OH$, wherein p is an integer in the range of from 2 to 10, preferably in the range of from 4 to 6,

wherein (i.1) and (i.2) are reacted in the presence of at least one catalyst; optionally in the presence of at least one inert gas; optionally at a temperature in the range of from 100 to 250 °C; optionally at a pressure below 1 bar.

According to one embodiment of the method for preparation of a polyol, the method comprises reacting at least the compounds (i.1), (i.2) and (i.3) and optionally (i.4):

(i.1) a compound according to formula (II)

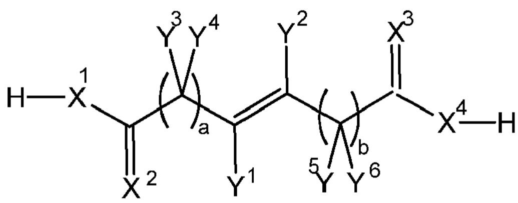

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol HO-$(CH_2)_{p1}$-OH, wherein $p^1$ is an integer in the range of from 2 to 10, preferably in the range of from 4 to 6;
(i.3) at least one saturated dicarboxylic acid HOOC-$(CH_2)_q$-COOH, wherein q is an integer in the range of from 1 to 20, preferably in the range of from 4 to 10, more preferably in the range of from 4 to 8, more preferably 6;
(i.4) optionally at least one further diol HO-$(CH_2)_p{}^2$-OH, wherein $p^2$ is an integer in the range of from 2 to 10, preferably in the range of from 4 to 6, wherein $p^2$ is not identical to $p^1$;

wherein (i.1), (i.2), (i.3) and optionally (i.4) are reacted in the presence of at least one catalyst; optionally in the presence of at least one inert gas; optionally at a temperature in the range of from 100 to 250 °C; optionally at a pressure below 1 bar.

According to one embodiment of the method for preparation of a polyol, in the compound according to formula (II) of (i.1) $X^1$, $X^2$, $X^3$ and $X^4$ are oxygen atoms. According to one embodiment of the method for preparation of a polyol, in the compound according to formula (II) of (i.1) the integers a and b are both zero. According to one embodiment of the method for preparation of a polyol, in the compound according to formula (II) of (i.1) the electron withdrawing group(s) is/are selected from the group consisting of halogen atom, wherein the halogen atom is preferably selected from the group consisting of fluorine atom, chlorine atom, bromine atom and iodine atom; -OH; -$NO_2$; -$NH_2$; -COOH and -CN. According to one embodiment of the method for preparation of a polyol, in the compound according to formula (II) of (i.1) $Y^3$, $Y^4$ $Y^5$, $Y^6$ are all hydrogen atoms and/or wherein $Y^1$, $Y^2$ are both hydrogen atoms. According to one embodiment of the method for preparation of a polyol, the compound according to formula (II) of (i.1) is maleic acid or fumaric acid.

According to one embodiment of the method for preparation of a polyol, the method comprises reacting at least the compounds (i.1), (i.2), (i.3) and (i.4):

(i.1) fumaric acid;
(i.2) 1,4-butane diol;
(i.3) adipic acid;
(i.4) 1,6-hexane diol.

The invention further relates to the polyol obtained or obtainable according to the method as described above.

The invention further relates to the use of the polyol as described above or of the polyol obtained or obtainable according to the method described above for the preparation of a thermoplastic polyurethane.

The method for preparation of a thermoplastic polyurethane

The invention further relates to a method for preparation of a thermoplastic polyurethane by reacting at least the compounds (i) to (iv):

(i) a polyol composition comprising at least one polyol which has at least two functional hydroxyl groups reactive to isocyanate and which has within its structure at least one structural element according to formula (I)

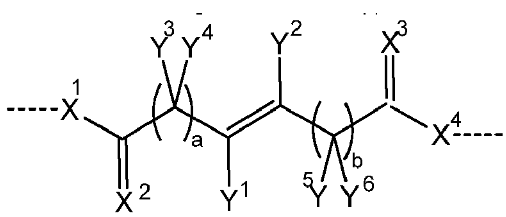

(I),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are

preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(ii) a polyisocyanate composition;
(iii) a diene composition comprising at least one anthracene compound of general formula (II)

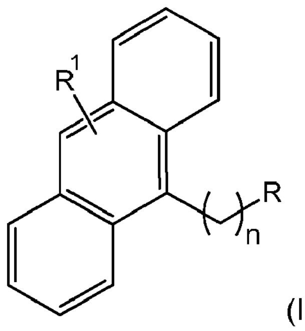

(II)

wherein n is an integer in the range of from 1 to 20; $R^1$ is selected from the group of hydrogen atom and C1 to C3 alkyl group; and
R represents either

- $-O-[C(=O)]_r-$ oligo- or polymer chain having at least two terminal functional groups $Z^1$ and $Z^2$, wherein r is zero or 1 and $Z^1$ and $Z^2$ are independently selected from the group consisting of methyl group, ethyl group, hydroxyl group, amino group, vinyl group, acryl group and isocyanate group;
  or
- $-O-C(=O)-(CH_2)_m-C(=O)-O-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;
  or
- $-NH-C(=O)-(CH_2)_m-C(=O)-NH-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;

(iv) optionally a chain extender composition comprising at least one diol;
(v) optionally a polyol composition comprising at least one polyol different from (i) and having two hydroxyl groups reactive towards isocyanate.

For R in the at least one anthracene compound of general formula (II) being $-O-[C(=O)]_r-$ oligo- or polymer chain having at least two terminal functional groups $Z^1$ and $Z^2$ with r, $Z^1$ and $Z^2$ as defined above, the oligo- or polymer chain has a substituent A, which is selected from hydrogen atom and anthracene ring, wherein the anthracene ring of A has at least one substituent $R^2$ which is selected from the group of hydrogen atom and C1 to C3 alkyl group, If A is a hydrogen atom, the diene composition according to (iii) comprises are at least two anthracene compounds of general formula (II). In these embodiments, the anthracene rings of the at least two anthracene compounds of general formula (II) or the two anthracene rings of the at least one anthracene compounds of general formula (II) together act as a bis-anthracene compound in the reaction with the polyol of the polyol composition according to (i).
According to one embodiment of the method for preparation of a thermoplastic polyurethane, the method comprises

(A) reacting at least the compounds

(i.1) a compound according to formula (III)

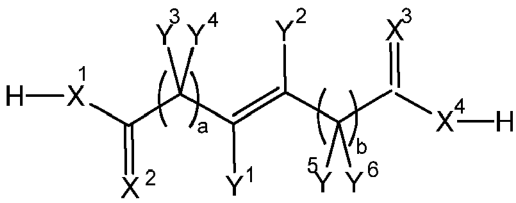

(III),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_{p1}-OH$, wherein $p^1$ is an integer in the range of from 2 to 10, preferably in the range of from 4 to 6;
(i.3) at least one saturated dicarboxylic acid $HOOC-(CH_2)_q-COOH$, wherein q is an integer in the range of from 2 to 12, preferably in the range of from 4 to 10, more preferably in the range of from 4 to 8, more preferably 6;
(i.4) optionally at least one further diol $HO-(CH_2)_p{}^2-OH$, wherein $p^2$ is an integer in the range of from 2 to 10, preferably in the range of from 4 to 6, wherein $p^2$ is not identical to $p^1$;

wherein (i.1), (i.2), (i.3) and optionally (i.4) are reacted in the presence of at least one catalyst; optionally in the presence of at least one inert gas; optionally at a temperature in the range of from 100 to 250 °C; optionally at a pressure below 1 bar; thereby forming a polyol which has at least two functional hydroxyl groups reactive to isocyanate and which has within its structure at least one structural element according to formula (I)

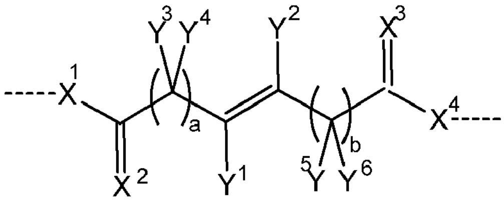

(I),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(B) reacting the polyol obtained from (A) further with

(ii) a polyisocyanate composition;
(iii) a diene composition comprising at least one anthracene compound of general formula (II)

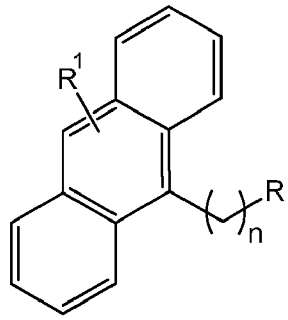

(II)

wherein n is an integer in the range of from 1 to 20; $R^1$ is selected from the group of hydrogen atom and C1 to C3 alkyl group; and
R represents either

- $-O-[C(=O)]_r-$ oligo- or polymer chain having at least two terminal functional groups $Z^1$ and $Z^2$, wherein r is zero or 1 and $Z^1$ and $Z^2$ are independently selected from the group consisting of methyl group, ethyl group, hydroxyl group, amino group, vinyl group, acryl group and isocyanate group;
or
- $-O-C(=O)-(CH_2)_m-C(=O)-O-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;
or
- $-NH-C(=O)-(CH_2)_m-C(=O)-NH-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;

(iv) optionally a chain extender composition comprising at least one diol;
(v) optionally a polyol composition comprising at least one polyol different from (i) and having two hydroxyl groups reactive towards isocyanate.

According to one embodiment of the method for preparation of a thermoplastic polyurethane, in the compound according to formula (III) of (i.1) $X^1$, $X^2$, $X^3$ and $X^4$ are oxygen atoms. According to one embodiment of the method for preparation of a thermoplastic polyurethane, in the compound according to formula (III) of (i.1) the integers a and b are both zero.

According to one embodiment of the method for preparation of a thermoplastic polyurethane, in the compound according to formula (III) of (i.1) the electron withdrawing group(s) is/are selected from the group consisting of halogen atom, wherein the halogen atom is preferably selected from the group consisting of fluorine atom, chlorine atom, bromine atom and iodine atom; -OH; - $NO_2$; $-NH_2$; -COOH and -CN. According to one embodiment of the method for preparation of a thermoplastic polyurethane, in the compound according to formula (III) of (i.1) $Y^3$, $Y^4$ $Y^5$, $Y^6$ are all hydrogen atoms and/or wherein $Y^1$, $Y^2$ are both hydrogen atoms. According to one embodiment of the method for preparation of a thermoplastic polyurethane, the compound according to formula (III) of (i.1) is maleic acid or fumaric acid.

According to one embodiment of the method for preparation of a thermoplastic polyurethane, the anthracene compound of general formula (II) according to (iii) has the general formula (IIa)

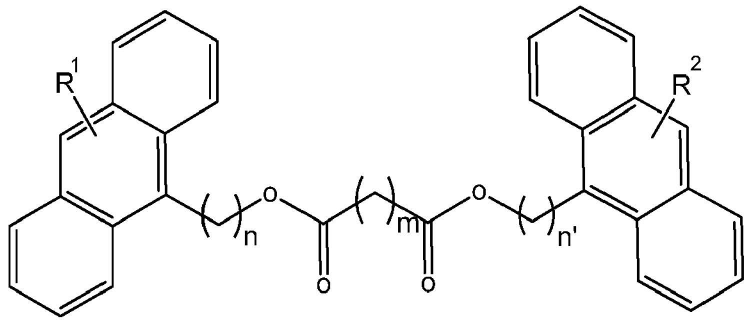

(IIa)

wherein n and n' are each independently an integer in the range of from 1 to 20, preferably in the range of from 1 to 5; m is an integer in the range of from 2 to 20, preferably in the range of from 2 to 10; and $R^1$ and $R^2$ are independently selected from the group of hydrogen atom and C1 to C3 alkyl group.

According to one embodiment of the method for preparation of a thermoplastic polyurethane, the anthracene compound of general formula (II) according to (iii) has the general formula IIb

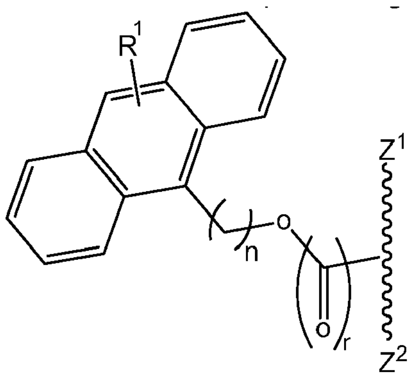
(IIb),

wherein

the sinous line represents an oligomeric chain or a polymeric chain comprising $-(CH_2)_s-$ units,$-(CH_2-CH_2-O)_s-$ units or $-(CH_2-CH_2-CH_2-O-)_s-$ units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10;
r is zero or 1; and
$R^1$ is selected from the group of hydrogen atom and C1 to C3 alkyl group, wherein the anthracene compound of general formula (IIb) is preferably reactive or unreactive substrate reactive towards isocyanate or hydroxyl group and is preferably a meltable solid or a liquid with viscosity of 100-1900 mPas at 75°C.

According to one embodiment of the method for preparation of a thermoplastic polyurethane, the anthracene compound of general formula (II) according to (iii) has the general formula (IIb-1)

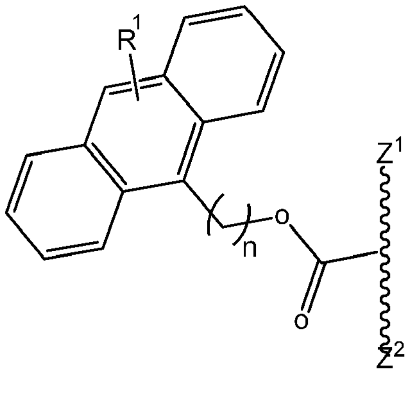
(IIb-1),

wherein

the sinous line represents an oligomeric chain or a polymeric chain comprising $-(CH_2)_s-$ units,$-(CH_2-CH_2-O)_s-$ units or $-(CH_2-CH_2-CH_2-O-)_s-$ units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10; and
$R^1$ is selected from the group of hydrogen atom and C1 to C3 alkyl group, wherein the anthracene compound of general formula (IIb-1) is preferably reactive or unreactive substrate reactive towards isocyanate or hydroxyl group

and is preferably a meltable solid or a liquid with viscosity of 100-1900 mPas at 75°C.

According to one embodiment of the method for preparation of a thermoplastic polyurethane, the anthracene compound of general formula (II) according to (iii) has the general formula (IIb-2)

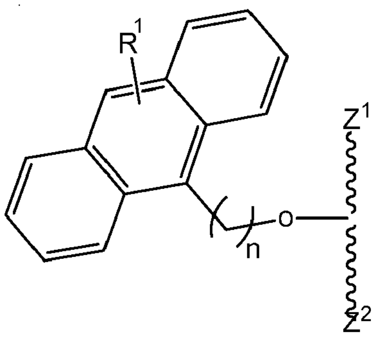

(IIb-2),

wherein

the sinous line represents an oligomeric chain or a polymeric chain comprising $-(CH_2)_s-$ units, $-(CH_2-CH_2-O)_s-$ units or $-(CH_2-CH_2-CH_2-O-)_s-$ units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10; and
$R^1$ is selected from the group of hydrogen atom and C1 to C3 alkyl group, wherein the anthracene compound of general formula (IIb-2) is preferably reactive or unreactive substrate reactive towards isocyanate or hydroxyl group and is preferably a meltable solid or a liquid with viscosity of 100-1900 mPas at 75°C.

According to one embodiment of the method for preparation of a thermoplastic polyurethane, the at least one diol of the optional chain extender composition (iv) is $HO-(CH_2)_t-OH$, wherein t is an integer in the range of from 2 to 10, preferably in the range of from 4 to 6, preferably 4.

According to one embodiment of the method for preparation of a thermoplastic polyurethane, the polyol composition (v) comprising at least one polyol different from (i) and having two hydroxyl groups reactive towards isocyanate comprises at least one polyester diol or at least one polyether diol, preferably at least one polyester diol different from (i), more preferably at least one polyester diol based on adipate ester with 1,6-hexane diol and 1,4-butane diol.

According to one embodiment of the method for preparation of a thermoplastic polyurethane, the diene composition (iii) is used in an amount in the range of from1-80 weight-%, preferably in the range of from 1-50 weight-%, more preferably in the range of from 1-30 weight-%, based on the overall weight of the components (i) to (iii) or (i) to (iv) or (i) to (v).

According to one embodiment of the method for preparation of a thermoplastic polyurethane, the molar ratio anthracene compound of general formula (II) according to (ii) : at least one polyol according to (i) is in the range of from 10:1 to 1:10, preferably in the range of from 5:1 to 1:5, more preferred in the range from 2:1 to 1:1, more preferred in the range from 1.5:1 to 1:1.5, more preferred in the range from 1.2:1 to 1:1.2, more preferred in the range from 1.1:1 to 1:1.1, more preferred 1:1.

According to one embodiment of the method for preparation of a thermoplastic polyurethane, the at least one polyol according to (i) which has within its structure at least one structural element according to formula (I) is obtained or obtainable by reaction of at least the compounds (i.1) and (i.2), wherein (i.1) and (i.2) are reacted in a molar ratio (i.1):(i.2) in the range of from 1:100 to 100:1, preferably in the range of from 5:95 to 50:50, more preferred in the range of from 10:90 to 40:60, based on the complete weight of (i.1) and (i.2).

According to one embodiment of the method for preparation of a thermoplastic polyurethane, the method comprises

(A) reacting at least the compounds

(i.1) fumaric acid;
(i.2) 1,4-butane diol;
(i.3) adipic acid;

(i.4) 1,6-hexane diol;

in the presence of at least one catalyst, optionally in the presence of at least one inert gas, optionally at a temperature in the range of from 100 to 250 °C, optionally at a pressure below 1 bar; thereby forming a polyol which has within its structure at least one structural element according to formula (Ia)

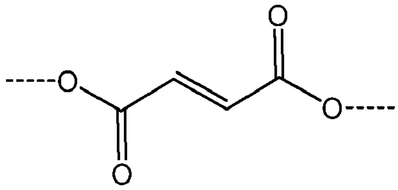

(Ia)

and which has at least two functional hydroxyl groups reactive to isocyanate;
(B) reacting the polyol obtained from (A) further with

(ii) a polyisocyanate composition comprising at least MDI;
(iii) bis(9-anthrylmethyl)-ester of succinic acid; and
(iv) optionally a chain extender composition comprising at least 1,4-butane diol.

According to one embodiment of the method for preparation of a thermoplastic polyurethane, the method further comprises at least one work-up step after (A) and before (B).

The invention also relates to the thermoplastic polyurethane obtained or obtainable according to the method described above.

Uses of the thermoplastic polyurethane

The invention also relates to the use of the thermoplastic polyurethane according to any one of embodiments as described above or of the thermoplastic polyurethane obtained or obtainable according to the method of any one of embodiments as described above for the preparation of a molded article, an injection molded article, an extrusion article, or a foil.

The invention also relates to the use of the thermoplastic polyurethane according to any one of embodiments as described above or of the thermoplastic polyurethane obtained or obtainable according to the method of any one of embodiments as described above for extrusion applications, preferably for an extruded article, more preferably an extruded article selected from the group consisting of cable jacketing, tube and hose; injection molding applications, preferably for an injection molded article, more preferably for an injection molded article selected from the group consisting of roller, gasket, seal, railway pad, and conveyor belt, preferably with improved compression set, with improved thermal resistance and creep performance.

The present invention is further illustrated by the following embodiments and combinations of embodiments as indicated by the respective dependencies and back-references. In particular, it is noted that in each instance where a range of embodiments is mentioned, for example in the context of a term such as "The ... of any of embodiments 1 to 4", every embodiment in this range is meant to be explicitly disclosed for the skilled person, i.e. the wording of this term is to be understood by the skilled person as being synonymous to "The ... of any of embodiments 1, 2, 3, and 4".

1. Thermoplastic polyurethane obtained or obtainable by reaction of at least the compounds (i) to (iv):

(i) a polyol composition comprising at least one polyol which has at least two functional hydroxyl groups reactive to isocyanate and which has within its structure at least one structural element according to formula (I)

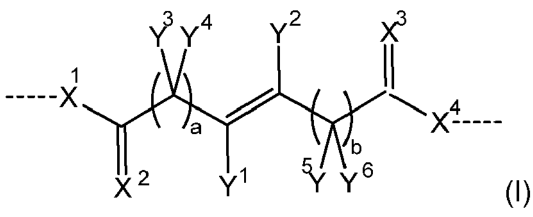

(I),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(ii) a polyisocyanate composition;
(iii) a diene composition comprising at least one anthracene compound of general formula (II)

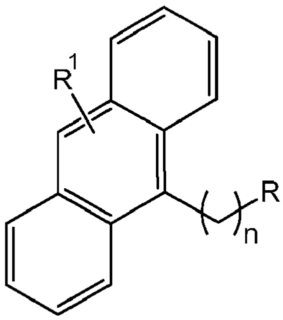

(II)

wherein n is an integer in the range of from 1 to 20; $R^1$ is selected from the group of hydrogen atom and C1 to C3 alkyl group; and
R represents either

- $-O-[C(=O)]_r-$ oligo- or polymer chain having at least two terminal functional groups $Z^1$ and $Z^2$, wherein r is zero or 1 and $Z^1$ and $Z^2$ are independently selected from the group consisting of methyl group, ethyl group, hydroxyl group, amino group, vinyl group, acryl group and isocyanate group;
or
- $-O-C(=O)-(CH_2)_m-C(=O)-O-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;
or
- $-NH-C(=O)-(CH_2)_m-C(=O)-NH-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;

(iv) optionally a chain extender composition comprising at least one diol;
(v) optionally a polyol composition comprising at least one polyol different from (i) and having two hydroxyl groups reactive towards isocyanate.

2. The thermoplastic polyurethane according to embodiment 1, wherein the at least one polyol of the polyol composition (i) which has within its structure at least one structural element according to formula (I) is obtained or obtainable by reaction of at least the compounds (i.1) and (i.2):

(i.1) a compound according to formula (III)

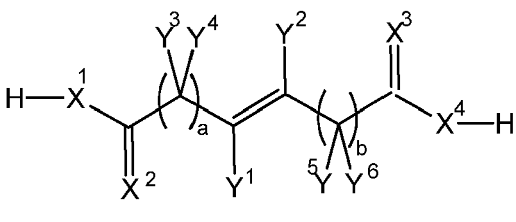

(III),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_p-OH$, wherein p is an integer in the range of from 2 to 10, preferably in the range of from 4 to 6.

3. The thermoplastic polyurethane according to embodiment 1 or 2, wherein the at least one polyol of the polyol composition (i) which has within its structure at least one structural element according to formula (I) is obtained or obtainable by reaction of at least the compounds (i.1), (i.2) and (i.3) and optionally (i.4):

(i.1) a compound according to formula (III)

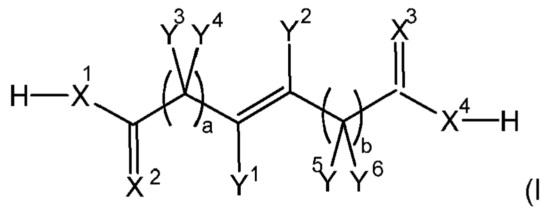
(III),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_{p1}-OH$, wherein $p_1$ is an integer in the range of from 2 to 10, preferably in the range of from 4 to 6;
(i.3) at least one saturated dicarboxylic acid $HOOC-(CH_2)_q-COOH$, wherein q is an integer in the range of from 1 to 20, preferably in the range of from 4 to 10, more preferably in the range of from 4 to 8, more preferably 6;
(i.4) optionally at least one further diol $HO-(CH_2)_p{}^2-OH$, wherein $p^2$ is an integer in the range of from 2 to 10, preferably in the range of from 4 to 6, wherein $p^2$ is not identical to $p^1$.

4. The thermoplastic polyurethane according to any of embodiments 1 to 3, wherein in the compound according to formula (III) of (i.1) $X^1$, $X^2$, $X^3$ and $X^4$ are oxygen atoms.

5. The thermoplastic polyurethane according to any of embodiments 1 to 4, wherein in the compound according to formula (III) of (i.1) the integers a and b are both zero.

6. The thermoplastic polyurethane according to any of embodiments 1 to 5, wherein in the compound according to formula (III) of (i.1) the electron withdrawing group(s) is/are selected from the group consisting of halogen atom, wherein the halogen atom is preferably selected from the group consisting of fluorine atom, chlorine atom, bromine atom and iodine atom; -OH; $-NO_2$; $-NH_2$; -COOH and -CN.

7. The thermoplastic polyurethane according to any of embodiments 1 to 6, wherein in the compound according to formula (III) of (i.1) $Y^3$, $Y^4$ $Y^5$, $Y^6$ are all hydrogen atoms and/or wherein $Y^1$, $Y^2$ are both hydrogen atoms.

8. The thermoplastic polyurethane according to any of embodiments 1 to 7, wherein the compound according to formula (III) of (i.1) is maleic acid or fumaric acid.

9. Thermoplastic polyurethane according to any of embodiments 1 to 8, wherein the anthracene compound of general formula (II) according to (iii) has the general formula (IIa)

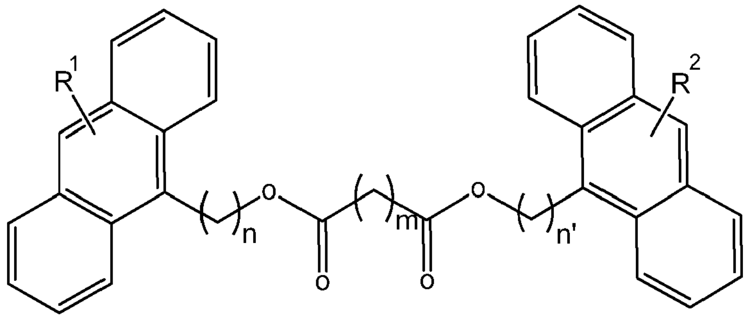

(IIa)

wherein n and n' are each independently an integer in the range of from 1 to 20, preferably in the range of from 1 to 5; m is an integer in the range of from 2 to 20, preferably in the range of from 2 to 10; and $R^1$ and $R^2$ are independently selected from the group of hydrogen atom and C1 to C3 alkyl group.

10. Thermoplastic polyurethane according to any of embodiments 1 to 8, wherein the anthracene compound of general formula (II) according to (iii) has the general formula (IIb)

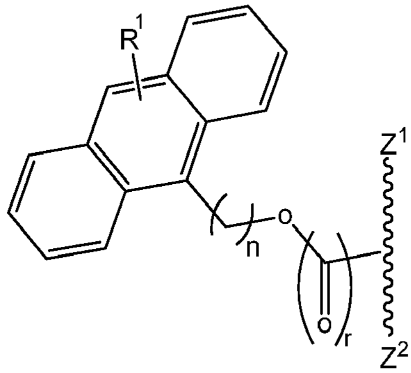

(IIb),

wherein

the sinous line represents an oligomeric chain or a polymeric chain comprising $-(CH_2)_s$-units, $-(CH_2-CH_2-O)_s$-units or $-(CH_2-CH_2-CH_2-O-)_s$- units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10;
r is zero or 1; and
$R^1$ is selected from the group of hydrogen atom and C1 to C3 alkyl group, wherein the anthracene compound of general formula (IIb) is preferably reactive or unreactive substrate reactive towards isocyanate or hydroxyl group and is preferably a meltable solid or a liquid with viscosity of 100-1900 mPas at 75°C.

11. Thermoplastic polyurethane according to embodiment 10, wherein the anthracene compound of general formula (II) according to (iii) has the general formula (IIb-1)

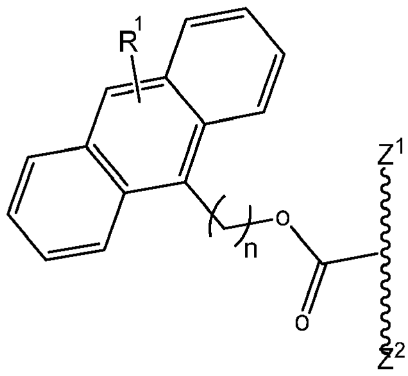

(IIb-1),

wherein

the sinous line represents an oligomeric chain or a polymeric chain comprising $-(CH_2)_s$-units, $-(CH_2-CH_2-O)_s$-units or $-(CH_2-CH_2-CH_2-O-)_s$- units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10; and
$R^1$ is selected from the group of hydrogen atom and C1 to C3 alkyl group, wherein the anthracene compound of general formula (IIb-1) is preferably reactive or unreactive substrate reactive towards isocyanate or hydroxyl group and is preferably a meltable solid or a liquid with viscosity of 100-1900 mPas at 75°C.

12. Thermoplastic polyurethane according to embodiment 10, wherein the anthracene compound of general formula (II) according to (iii) has the general formula IIb-2

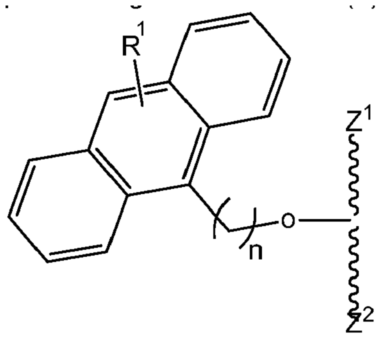

(IIb-2),

wherein

the sinous line represents an oligomeric chain or a polymeric chain comprising $-(CH_2)_s$-units, $-(CH_2-CH_2-O)_s$-units or $-(CH_2-CH_2-CH_2-O-)_s$- units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10; and
$R^1$ is selected from the group of hydrogen atom and C1 to C3 alkyl group, wherein the anthracene compound of general formula (IIb-2) is preferably reactive or unreactive substrate reactive towards isocyanate or hydroxyl group and is preferably a meltable solid or a liquid with viscosity of 100-1900 mPas at 75°C.

13. The thermoplastic polyurethane according to any one of embodiments 1 to 12, wherein the at least one diol of the optional chain extender composition (iv) is $HO-(CH_2)_t-OH$, wherein t is an integer in the range of from 2 to 10, preferably in the range of from 4 to 6, preferably 4.

14. The thermoplastic polyurethane according to any one of embodiments 1 to 13, wherein the polyol composition (v) comprising at least one polyol different from (i) and having two hydroxyl groups reactive towards isocyanate

comprises at least one polyester diol or at least one polyether diol, preferably at least one polyester diol different from (i), more preferably at least one polyester diol based on adipate ester with 1,6-hexane diol and 1,4-butane diol.

15. The thermoplastic polyurethane according to any one of embodiments 1 to 14, wherein the diene composition (iii) is used in an amount in the range of from 1-80 weight-%, preferably in the range of from 1-50 weight-%, more preferably in the range of from 1-30 weight-%, based on the overall weight of the components (i) to (iii) or (i) to (iv) or (i) to (v).

16. The thermoplastic polyurethane according to any one of embodiments 1 to 15, wherein the molar ratio anthracene compound of general formula (II) according to (ii) : at least one polyol according to (i) is in the range of from 10:1 to 1:10, preferably in the range of from 5:1 to 1:5, more preferred in the range from 2:1 to 1:1, more preferred in the range from 1.5:1 to 1:1.5, more preferred in the range from 1.2:1 to 1:1.2, more preferred in the range from 1.1:1 to 1:1.1, more preferred 1:1.

17. The thermoplastic polyurethane according to any one of embodiments 1 to 16, wherein the at least one polyol according to (i) which has within its structure at least one structural element according to formula (I) is obtained or obtainable by reaction of at least the compounds (i.1) and (i.2), wherein (i.1) and (i.2) are reacted in a molar ratio (i.1):(i.2) in the range of from 1:100 to 100:1, preferably in the range of from 5:95 to 50:50, more preferred in the range of from 10:90 to 40:60, based on the complete weight of (i.1) and (i.2).

18. Thermoplastic polyurethane according to any one of embodiments 1 to 17, obtained or obtainable by reaction of at least the compounds (i) to (iv):

(i) a polyol composition obtained or obtainable by reaction of at least the compounds (i.1) to (i.4):

(i.1) fumaric acid;
(i.2) 1,4-butane diol;
(i.3) adipic acid;
(i.4) 1,6-hexane diol;

(ii) a polyisocyanate composition comprising at least MDI;
(iii) a diene composition comprising at least bis(9-anthrylmethyl)-ester of succinic acid;
(iv) optionally a chain extender composition comprising at least 1,4-butane diol.

19. A polyol obtained or obtainable by reaction of at least the compounds (i.1) and (i.2):

(i.1) a compound according to formula (II)

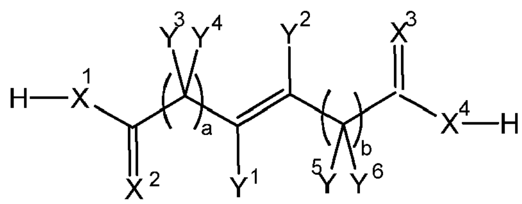

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group; ;

(i.2) at least one diol $HO-(CH_2)_p-OH$, wherein p is an integer in the range of from 2 to 10, preferably in the range of from 4 to 6.

20. The polyol according to embodiment 19, which is obtained or obtainable by reaction of at least the compounds

(i.1), (i.2) and (i.3) and optionally (i.4):

(i.1) a compound according to formula (II)

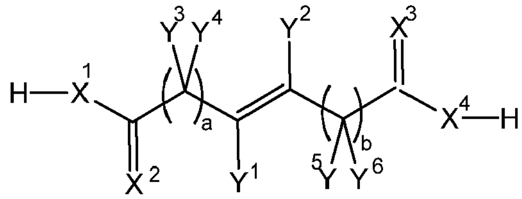

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_{p1}-OH$, wherein $p^1$ is an integer in the range of from 2 to 10, preferably in the range of from 4 to 6;
(i.3) at least one saturated dicarboxylic acid $HOOC-(CH_2)_q-COOH$, wherein q is an integer in the range of from 1-20, preferably in the range of from 4 to 10, more preferably in the range of from 4 to 8, more preferably 6;
(i.4) optionally at least one further diol $HO-(CH_2)_p{}^2-OH$, wherein $p^2$ is an integer in the range of from 2 to 10, preferably in the range of from 4 to 6, wherein $p^2$ is not identical to $p^1$.

21. The polyol according to embodiment 19 or 20, wherein in the compound according to formula (II) of (i.1) $X^1$, $X^2$, $X^3$ and $X^4$ are oxygen atoms.

22. The polyol according to any of embodiments 19 to 21, wherein in the compound according to formula (II) of (i.1) the integers a and b are both zero.

23. The polyol according to any of embodiments 19 to 22, wherein in the compound according to formula (II) of (i.1) the electron withdrawing group(s) is/are selected from the group consisting of halogen atom, wherein the halogen atom is preferably selected from the group consisting of fluorine atom, chlorine atom, bromine atom and iodine atom; -OH; $-NO_2$; $-NH_2$; -COOH and -CN.

24. The polyol according to any of embodiments 19 to 23, wherein in the compound according to formula (II) of (i.1) $Y^3$, $Y^4$ $Y^5$, $Y^6$ are all hydrogen atoms and/or wherein $Y^1$, $Y^2$ are both hydrogen atoms.

25. The polyol according to any of embodiments 19 to 24, wherein the compound according to formula (II) of (i.1) is maleic acid or fumaric acid.

26. The polyol according to any of embodiments 19 to 25, which is obtained or obtainable by reaction of at least the compounds (i.1), (i.2), (i.3) and (i.4):

(i.1) fumaric acid;
(i.2) 1,4-butane diol;
(i.3) adipic acid;
(i.4) 1,6-hexane diol.

27. A method for preparation of a polyol by reacting at least the compounds (i.1) and (i.2)

(i.1) a compound according to formula (II)

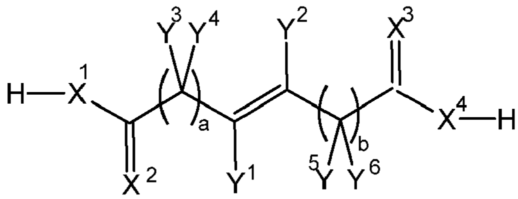

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_p-OH$, wherein p is an integer in the range of from 2 to 10, preferably in the range of from 4 to 6.

wherein (i.1) and (i.2) are reacted in the presence of at least one catalyst; optionally in the presence of at least one inert gas; optionally at a temperature in the range of from 100 to 250 °C; optionally at a pressure below 1 bar.

28. The method for preparation of a polyol according to embodiment 27, by reacting at least the compounds (i.1), (i.2) and (i.3) and optionally (i.4):

(i.1) a compound according to formula (II)

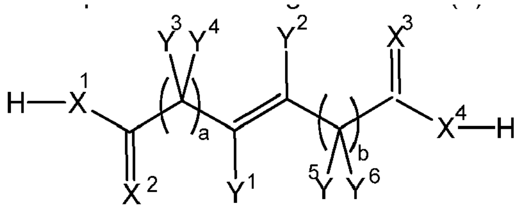

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_{p1}-OH$, wherein $p^1$ is an integer in the range of from 2 to 10, preferably in the range of from 4 to 6;
(i.3) at least one saturated dicarboxylic acid $HOOC-(CH_2)_q-COOH$, wherein q is an integer in the range of from 1 to 20, preferably in the range of from 4 to 10, more preferably in the range of from 4 to 8, more preferably 6;
(i.4) optionally at least one further diol $HO-(CH_2)_{p^2}-OH$, wherein $p^2$ is an integer in the range of from 2 to 10, preferably in the range of from 4 to 6, wherein $p^2$ is not identical to $p^1$;

wherein (i.1), (i.2), (i.3) and optionally (i.4) are reacted in the presence of at least one catalyst; optionally in the presence of at least one inert gas; optionally at a temperature in the range of from 100 to 250 °C; optionally at a pressure below 1 bar.

29. The method according to embodiment 27 or 28, wherein in the compound according to formula (II) of (i.1) $X^1$, $X^2$, $X^3$ and $X^4$ are oxygen atoms.

30. The method according to any of embodiments 27 to 29, wherein in the compound according to formula (II) of

(i.1) the integers a and b are both zero.

31. The method according to any of embodiments 27 to 30, wherein in the compound according to formula (II) of (i.1) the electron withdrawing group(s) is/are selected from the group consisting of halogen atom, wherein the halogen atom is preferably selected from the group consisting of fluorine atom, chlorine atom, bromine atom and iodine atom; -OH; - $NO_2$; $-NH_2$; -COOH and-CN.

32. The method according to any of embodiments 27 to 31, wherein in the compound according to formula (II) of (i.1) $Y^3$, $Y^4$ $Y^5$, $Y^6$ are all hydrogen atoms and/or wherein $Y^1$, $Y^2$ are both hydrogen atoms.

33. The method according to any of embodiments 27 to 32, wherein the compound according to formula (II) of (i.1) is maleic acid or fumaric acid.

34. The method for preparation of a polyol according to any of embodiments 27 to 33 by reacting at least the compounds (i.1), (i.2), (i.3) and (i.4):

(i.1) fumaric acid;
(i.2) 1,4-butane diol;
(i.3) adipic acid;
(i.4) 1,6-hexane diol.

35. The polyol obtained or obtainable according to the method of any one of embodiments 27 to 34.

36. Use of the polyol according to any one of embodiments 19 to 25 or of the polyol obtained or obtainable according to the method of any one of embodiments 27 to 34 for the preparation of a thermoplastic polyurethane.

37. A method for preparation of a thermoplastic polyurethane by reacting at least the compounds (i) to (iv):

(i) a polyol composition comprising at least one polyol which has at least two functional hydroxyl groups reactive to isocyanate and which has within its structure at least one structural element according to formula (I)

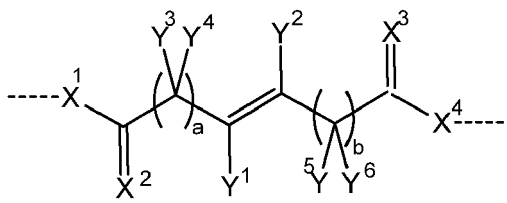

(I),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(ii) a polyisocyanate composition;
(iii) a diene composition comprising at least one anthracene compound of general formula (II)

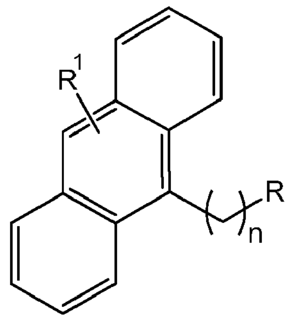

(II)

wherein n is an integer in the range of from 1 to 20; $R^1$ is selected from the group of hydrogen atom and C1 to C3 alkyl group; and
R represents either

- -O-[C(=O)]$_r$- oligo- or polymer chain having at least two terminal functional groups $Z^1$ and $Z^2$, wherein r is zero or 1 and $Z^1$ and $Z^2$ are independently selected from the group consisting of methyl group, ethyl group, hydroxyl group, amino group, vinyl group, acryl group and isocyanate group;
or
- -O-C(=O)-$(CH_2)_m$-C(=O)-O-$(CH_2)_{n'}$-anthracene ring having at least one substituent $R^2$ which is selected from the group of hydrogen atom and C1 to C3 alkyl group, wherein n' is an integer in the range of from 1 to 20 and m is an integer in the range of from 2 to 20;
or
- -NH-C(=O)-$(CH_2)_m$-C(=O)-NH-$(CH_2)_{n'}$-anthracene ring having at least one substituent $R^2$ which is selected from the group of hydrogen atom and C1 to C3 alkyl group, wherein n' is an integer in the range of from 1 to 20 and m is an integer in the range of from 2 to 20;

(iv) optionally a chain extender composition comprising at least one diol;
(v) optionally a polyol composition comprising at least one polyol different from (i) and having two hydroxyl groups reactive towards isocyanate.

38. The method for preparation of a thermoplastic polyurethane according to embodiment 37 comprising

(A) reacting at least the compounds

(i.1) a compound according to formula (III)

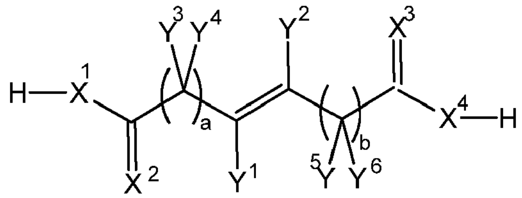

(III),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol HO-$(CH_2)_{p1}$-OH, wherein $p^1$ is an integer in the range of from 2 to 10, preferably in the range of from 4 to 6;
(i.3) at least one saturated dicarboxylic acid HOOC-$(CH_2)_q$-COOH, wherein q is an integer in the range of from 2 to 12, preferably in the range of from 4 to 10, more preferably in the range of from 4 to 8, more

preferably 6;

(i.4) optionally at least one further diol $HO-(CH_2)_{p^2}-OH$, wherein $p^2$ is an integer in the range of from 2 to 10, preferably in the range of from 4 to 6, wherein $p^2$ is not identical to $p^1$;

wherein (i.1), (i.2), (i.3) and optionally (i.4) are reacted in the presence of at least one catalyst; optionally in the presence of at least one inert gas; optionally at a temperature in the range of from 100 to 250 °C; optionally at a pressure below 1 bar; thereby forming a polyol which has at least two functional hydroxyl groups reactive to isocyanate and which has within its structure at least one structural element according to formula (I)

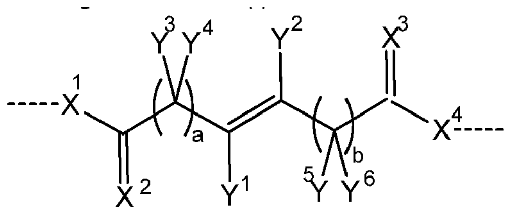

(I),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;

a and b are independently zero or an integer in the range of from 1 to 10;

$Y^1$ to $Y^6$ are independently hydrogen atom or an electron withdrawing group;

(B) reacting the polyol obtained from (A) further with

(ii) a polyisocyanate composition;

(iii) a diene composition comprising at least one anthracene compound of general formula (II)

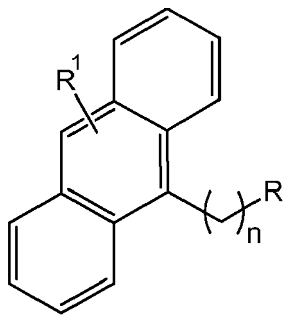

(II)

wherein n is an integer in the range of from 1 to 20; $R^1$ is selected from the group of hydrogen atom and C1 to C3 alkyl group; and

R represents either

- $-O-[C(=O)]_r-$ oligo- or polymer chain having at least two terminal functional groups $Z^1$ and $Z^2$, wherein r is zero or 1 and $Z^1$ and $Z^2$ are independently selected from the group consisting of methyl group, ethyl group, hydroxyl group, amino group, vinyl group, acryl group and isocyanate group;

  or
- $-O-C(=O)-(CH_2)_m-C(=O)-O-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;

  or
- $-NH-C(=O)-(CH_2)_m-C(=O)-NH-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;

(iv) optionally a chain extender composition comprising at least one diol;

(v) optionally a polyol composition comprising at least one polyol different from (i) and having two hydroxyl groups reactive towards isocyanate.

39. The method according to embodiment 37 or 38, wherein in the compound according to formula (III) of (i.1) $X^1$, $X^2$, $X^3$ and $X^4$ are oxygen atoms.

40. The method according to any of embodiments 37 to 39, wherein in the compound according to formula (III) of (i.1) the integers a and b are both zero.

41. The method according to any of embodiments 37 to 40, wherein in the compound according to formula (III) of (i.1) the electron withdrawing group(s) is/are selected from the group consisting of halogen atom, wherein the halogen atom is preferably selected from the group consisting of fluorine atom, chlorine atom, bromine atom and iodine atom; -OH; - $NO_2$; -$NH_2$; -COOH and -CN.

42. The method according to any of embodiments 37 to 41, wherein in the compound according to formula (III) of (i.1) $Y^3$, $Y^4$ $Y^5$, $Y^6$ are all hydrogen atoms and/or wherein $Y^1$, $Y^2$ are both hydrogen atoms.

43. The method according to any of embodiments 37 to 42, wherein the compound according to formula (III) of (i.1) is maleic acid or fumaric acid.

44. The method according to any of embodiments 37 to 43, wherein the anthracene compound of general formula (II) according to (iii) has the general formula (IIa)

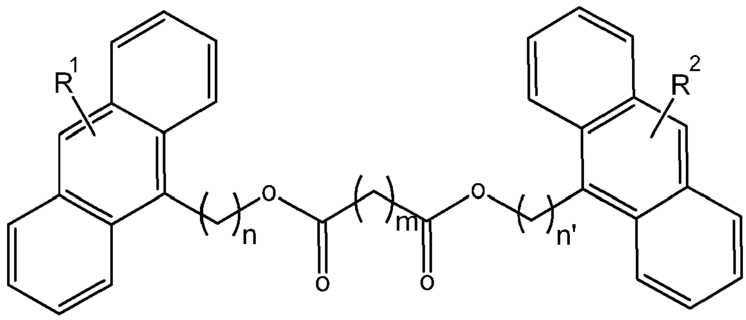

(IIa)

wherein n and n' are each independently an integer in the range of from 1 to 20, preferably in the range of from 1 to 5; m is an integer in the range of from 2 to 20, preferably in the range of from 2 to 10; and $R^1$ and $R^2$ are independently selected from the group of hydrogen atom and C1 to C3 alkyl group.

45. The method according to any of embodiments 37 to 43, wherein the anthracene compound of general formula (II) according to (iii) has the general formula (IIb)

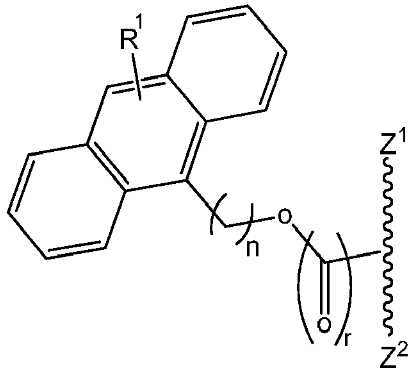

(IIb),

wherein

the sinous line represents an oligomeric chain or a polymeric chain comprising $-(CH_2)_s$-units, $-(CH_2-CH_2-O)_s$-units or $-(CH_2-CH_2-CH_2-O-)_s$- units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10;
r is zero or 1; and
$R^1$ is selected from the group of hydrogen atom and C1 to C3 alkyl group, wherein the anthracene compound of general formula (IIb) is preferably reactive or unreactive substrate reactive towards isocyanate or hydroxyl group and is preferably a meltable solid or a liquid with viscosity of 100-1900 mPas at 75°C.

46. The method according to any of embodiments 37 to 43 or 45, wherein the anthracene compound of general formula (II) according to (iii) has the general formula (IIb-1)

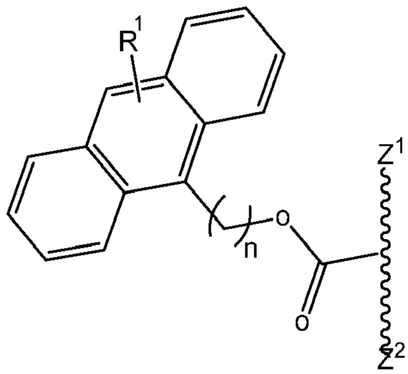
(IIb-1),

wherein

the sinous line represents an oligomeric chain or a polymeric chain comprising $-(CH_2)_s$-units, $-(CH_2-CH_2-O)_s$-units or $-(CH_2-CH_2-CH_2-O-)_s$- units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10; and
$R^1$ is selected from the group of hydrogen atom and C1 to C3 alkyl group, wherein the anthracene compound of general formula (IIb-1) is preferably reactive or unreactive substrate reactive towards isocyanate or hydroxyl group and is preferably a meltable solid or a liquid with viscosity of 100-1900 mPas at 75°C.

47. The method according to any of embodiments 37 to 43 or 45, wherein the anthracene comoound of general formula (II) according to (iii) has the general formula IIb-2

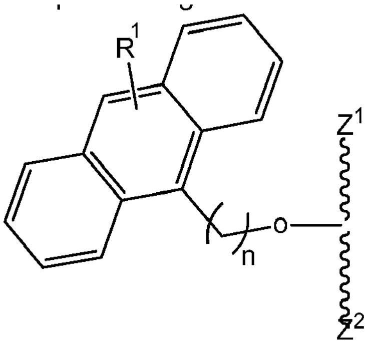
(IIb-2),

wherein

the sinous line represents an oligomeric chain or a polymeric chain comprising $-(CH_2)_s$-units, $-(CH_2-CH_2-O)_s$-units or $-(CH_2-CH_2-CH_2-O-)_s$- units, wherein s is an integer in the range of from 2 to 50;

$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10; and
$R^1$ is selected from the group of hydrogen atom and C1 to C3 alkyl group, wherein the anthracene compound of general formula (IIb-2) is preferably reactive or unreactive substrate reactive towards isocyanate or hydroxyl group and is preferably a meltable solid or a liquid with viscosity of 100-1900 mPas at 75°C.

48. The method according to any of embodiments 37 to 47, wherein the at least one diol of the optional chain extender composition (iv) is $HO-(CH_2)_t-OH$, wherein t is an integer in the range of from 2 to 10, preferably in the range of from 4 to 6, preferably 4.

49. The method according to any of embodiments 37 to 48, wherein the polyol composition (v) comprising at least one polyol different from (i) and having two hydroxyl groups reactive towards isocyanate comprises at least one polyester diol or at least one polyether diol, preferably at least one polyester diol different from (i), more preferably at least one polyester diol based on adipate ester with 1,6-hexane diol and 1,4-butane diol.

50. The method according to any of embodiments 37 to 49, wherein the diene composition (iii) is used in an amount in the range of from 1-80 weight-%, preferably in the range of from 1-50 weight-%, more preferably in the range of from 1-30 weight-%, based on the overall weight of the components (i) to (iii) or (i) to (iv) or (i) to (v).

51. The method according to any of embodiments 37 to 50, wherein the molar ratio anthracene compound of general formula (II) according to (ii) : at least one polyol according to (i) is in the range of from 10:1 to 1:10, preferably in the range of from 5:1 to 1:5, more preferred in the range from 2:1 to 1:1, more preferred in the range from 1.5:1 to 1:1.5, more preferred in the range from 1.2:1 to 1:1.2, more preferred in the range from 1.1:1 to 1:1.1, more preferred 1:1.

52. The method according to any of embodiments 37 to 51, wherein the at least one polyol according to (i) which has within its structure at least one structural element according to formula (I) is obtained or obtainable by reaction of at least the compounds (i.1) and (i.2), wherein (i.1) and (i.2) are reacted in a molar ratio (i.1):(i.2) in the range of from 1:100 to 100:1, preferably in the range of from 5:95 to 50:50, more preferred in the range of from 10:90 to 40:60, based on the complete weight of (i.1) and (i.2).

53. The method for preparation of a thermoplastic polyurethane according to any of embodiments 37 to 52 comprising

(A) reacting at least the compounds

(i.1) fumaric acid;
(i.2) 1,4-butane diol;
(i.3) adipic acid;
(i.4) 1,6-hexane diol;

in the presence of at least one catalyst, optionally in the presence of at least one inert gas, optionally at a temperature in the range of from 100 to 250 °C, optionally at a pressure below 1 bar; thereby forming a polyol which has within its structure at least one structural element according to formula (Ia)

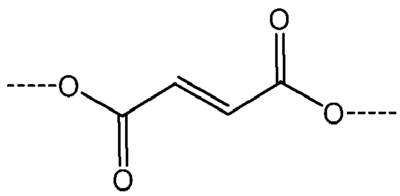

(Ia)

and which has at least two functional hydroxyl groups reactive to isocyanate;
(B) reacting the polyol obtained from (A) further with

(ii) a polyisocyanate composition comprising at least MDI;
(iii) bis(9-anthrylmethyl)-ester of succinic acid; and
(iv) optionally a chain extender composition comprising at least 1,4-butane diol.

54. The method for preparation of a thermoplastic polyurethane according to any one of embodiments 37 to 53 further comprising at least one work-up step after (A) and before (B).

55. The thermoplastic polyurethane obtained or obtainable according to the method of any one of embodiments 37 to 54.

56. Use of the thermoplastic polyurethane according to any one of embodiments 1 to 18 or of the thermoplastic polyurethane obtained or obtainable according to the method of any one of embodiments 37 to 55 for the preparation of a molded article, an injection molded article, an extrusion article, or a foil.

57. Use of the thermoplastic polyurethane according to any one of embodiments 1 to 18 or of the thermoplastic polyurethane obtained or obtainable according to the method of any one of embodiments 37 to 55 for extrusion applications, preferably for an extruded article, more preferably an extruded article selected from the group consisting of cable jacketing, tube and hose; injection molding applications, preferably for an injection molded article, more preferably for an injection molded article selected from the group consisting of roller, gasket, seal, railway pad, and conveyor belt, preferably with improved compression set, with improved thermal resistance and creep performance.

The present invention is further illustrated by the following comparative examples and examples.

## Examples

### Chemicals

| Compound | Abbreviation |
|---|---|
| Bis(9-anthrylmethyl)-ester of succinic acid | bis-anthracene |
| 1,4-butane diol | BDO |
| 1,6-hexane diol | HDO |
| Fumaric acid | --- |
| Adipic acid | --- |
| Adipate ester polyol based on adipic acid, 1,4-butane diol and 1,6-hexane diol having MW of 2000 g/mol | Polyol 1 |
| Fumarate based polyesterol | FM PESOL |
| Mixture of 98.6 weight-% 4,4'-MDI and 1.4 weight-% 2,4' MDI with an NCO-content of 33.5% (Lupranat MET) | MDI |
| Tetrabutyl orthotitanate (Titanium(IV) butoxide, CAS: 5593-70-4) | TBOT |
| 2,6-Di-tert-butyl-4-methylphenol | BHT |
| Tin(II) 2-ethylhexanoate (CAS: 301-10-0) | SDO |
| Polymer based on carbodiimide and poly glycol ether (Elastostab H01) | Hydrolysis stabilizer |

### Methods

Determination of

| | |
|---|---|
| hydroxyl values: | DIN53240 |
| Compression set: | DIN ISO 815 |
| Elongation at break: | DIN 53504 |
| Shore hardness: | DIN ISO 7619-1 |
| Viscosity (at 25°C) | DIN EN ISO 3219 |

Measurement of creep resistance method:

A TPU tensile bar (S1) was stretched with a particular force (4 MPa) and kept in the elongated state for 60 mins at a particular temperature (Room temperature or 100 °C). Due to the application of this force the tensile bar was elongated. The difference in length of the tensile bar before (dL ($t_{before}$)) and after application (dL($t_{after}$)) of the force represented the creep resistance (ΔLz):

$$\Delta Lz = dL(t_{after}) - dL\ (t_{before}).$$

Synthesis of Bis-Anthracene . An example synthesis was adapted from a reported procedure by Mandelbaum et al. [4] and is as follows: 4-dimethylaminopyridine (DMAP) (19.78 g, 0.162 mol) and 9-anthracenemethanol (32.87 g, 0.158 mol) were placed into a 3-neck flask with a nitrogen inlet and outlet and an additional funnel (dropping funnel). 400 ml of dry Acetonitrile was added in the flask and the components were stirred until fully dissolved. Adipoyl chloride (14.45 g, 0.079 mol) was placed into 50 ml of dry acetonitrile and was added dropwise to the 9-anthracenemethanol solution. The combined solution was heated to 80°C and allowed to reflux for 4 hours (the additional funnel was replaced with a reflux condenser). After the 4 hours the solution was allowed to cool to room temperature and then filtered through a Buchner funnel. The collected product was vigorously stirred in 1 L of ethanol for 1 hour and then collect again via filtration with a Buchner funnel. Pure product was achieved with no further purification necessary after the stirring in ethanol. A yellow powder was obtained after collecting and drying in a vacuum oven at 80°C overnight (-22 g, 53% yield). The anthracene was also synthesized with the dicarboxylic acid but this procedure followed exactly that reported by G.-W. Wang except that after refluxing the mixture was allowed to cool to room temperature and filtered. The product was washed by ethanol in the same fashion as the synthesis with the acid chloride to acquire the pure product.[5]

**Example 1: Synthesis of fumarate based polyesterol (FM PESOL)**

The dienophile based polyesterpolyol FM PESOL was synthesized in that 1288.7 g adipic acid, 341.2 g fumaric acid, 804.9 g 1,4-butanediol, 527.8 g 1,6-hexanediol and 1ppm TTB were charged into a 4 liter round bottom flask equipped with a nitrogen inlet and a distillation column. 3000 ppm BHT, wherein the ppm are based on the overall weight of all starting materials, were added and the reaction mixture was heated to 180°C (under nitrogen) over 2 hours while stirring and left at this temperature for 8 hours. 5 ppm of SDO, wherein the ppm are based on the overall weight of all starting materials, were added, vacuum was applied (60 mbar) and the reaction mixture was heated to 200°C over 2 hours while stirring and left at this temperature for 14 hours. The formed water was removed by distillation. The liquid polyesterol FM PESOL was obtained in the form of colorless oil and had the following characteristics:

| | |
|---|---|
| Hydroxyl number | 53.4 mg KOH/g |
| Acid number | 1.2 mg KOH/g |
| Viscosity (75 °C) | 1463 mPas |
| Mw | ~2100 g/mol |

**Example 2: Synthesis of thermoplastic polyurethanes**

Thermoplastic polyurethanes (TPUs) were synthesized based on the TPU recipes as shown in Table 1.

**Table 1**

| TPU recipes | | | | | | | | |
|---|---|---|---|---|---|---|---|---|
| TPU | Polyol1 [g] | FM PESOL [g] | BDO (Chain extender) [g] | MDI (Diisocyanate) [g] | Hard segment fraction | Amount of anthracene [g] | anthra thracene [weig ht-%] | Hydrolysis stabilizer [g] |
| TPU 1 | 595 | 255 | 142.2 | 503.4 | 0.4 | 0 | 0 | 6.8 |
| TPU 2 | 595 | 255 | 142.2 | 503.4 | 0.4 | 22.9 g | 1.5 | 6.8 |

(continued)

| TPU recipes | | | | | | | | |
|---|---|---|---|---|---|---|---|---|
| TPU | Polyol1 [g] | FM PESOL [g] | BDO (Chain extender) [g] | MDI (Diisocyanate) [g] | Hard segment fraction | Amount of anthracene [g] | anthra thracene [weig ht-%] | Hydrolysis stabilizer [g] |
| TPU 3 | 595 | 255 | 142.2 | 503.4 | 0.4 | 46.5 g | 3.0 | 6.8 |

TPU were synthesized with FM polyesterol inside the soft segment and varying amounts of bis-anthracene based on the recipes of Table 1 as follows:
In a 2 liter metal container, polyol and chain extender were mixed with a mechanical stirrer under a constant flow of nitrogen. The container was then subsequently covered and placed inside a hot air oven preheated at 100°C to 120°C. The preheated mixture was taken out of the oven and required amounts of stabilization additives and bis-anthracene or crosslinker additives were added followed by stirring. In a separate vessel, polyisocyanatewas heated to a temperature of 45 °C. Once the temperature of the polyol mixture reached 80 °C, preheated polyisocyanate was added and the mixture stirred at 200 rpm. Due to the exothermic reaction, the mixture was poured into a teflon frame kept over a hot plate having a temperature of 125 °C to obtain a TPU slab. Once the TPU slab turned solid, it was removed from the hot plate and subsequently annealed inside a hot oven at 80 °C for 24 h. The TPU was allowed to cool gradually, followed by milling in a grinder and thereafter shredded to small granulates. The granulates were dried at 110 °C for 3 h and then injection molded to test plaques of size 2mm x 6mm. The test plaques were then used to determine the mechanical performance.

**Example 3: Reversibility of the crosslinking motifs**

Reversibility in the crosslinking process was verified by temperature dependent melt-flow-index (MFI) measurement. TPUs according to Example 2 having fumarate based polyols with 0 weight-%, 1.5 weight-% and 3 weight-% bis-anthracene as crosslinker were used and MFI were measured at 210, 220, 230, 240 and 250 °C. The results are shown in Fig 1.

To validate the effect of crosslinking in TPU, MFI measured at 220 °C for TPU 1 without cross-linker flew, but not the TPUs 2 and 3 with 1.5 weight-% and 3 weight-% crosslinker. These TPUs 2 and 3 with 1.5 weight-% and 3 weight-% crosslinker bis-anthracene started to flow at 230 and 240 °C, indicating that the material remains crosslinked until 220 and 230 °C bis-anthracene. This clearly validated the effect of crosslinking and showed that the material de-crosslinks at temperatures above 220 or 230 °C depending on the degree of crosslinking. Additionally, the mechanical performance of the TPU and creep performance were measured at elevated temperature and at room temperature showing the improvement of creep performance at elevated temperature.

**Example 4: Effects on the mechanical performance**

TPUs 1, 2 and 3 according to Example 2 were tested with respect to their elongation at break. It was found out that with an increasing content of bis-anthracene and in presence of FM PESOL, the effects of crosslinking were prominent. With increasing extent of crosslinking, the elongation at break value dropped from 580%, in TPU with only FM PESOL without crosslinker (TPU 1) to 530% and to 480% in case of crosslinked TPUs (TPU 2 and TPU 3). The Shore hardness and Elongation at break are indicated in Table 2.

**Table 2**

| Mechanical properties of TPUs 1-3 at room temperature (23 °C) | | | | |
|---|---|---|---|---|
| | | Hard Segment content [weight-%] | Shore hardness (D) | Elongation at break [%] |
| TPU 1 | 70% Polyol 1 +30% FM PESOL and BDO with MDI + 0% bis-anthracene | 36.0 | 46 | 580 |
| TPU 2 | 70% Polyol 1 +30% FM PESOL and BDO with MDI + 1.5% bis-anthracene | 36.0 | 48 | 530 |

(continued)

| Mechanical properties of TPUs 1-3 at room temperature (23 °C) | | | | |
|---|---|---|---|---|
| | | Hard Segment content [weight-%] | Shore hardness (D) | Elongation at break [%] |
| TPU 3 | 70% Polyol 1 +30% FM PESOL and BDO with MDI + 3% bis-anthracene | 36.0 | 48 | 480 |

**Example 5: Effect on creep resistance**

Creep resistance was analyzed for TPUs 1 to 3 according to Example 2 at room temperature (23 °C). The results are shown in Table 3.

**Table 3**

| Creep resistance of TPUs 1 to 3 at 23 °C | | | |
|---|---|---|---|
| **Material** | **dL ($t_{before}$) (%)** | **dL ($t_{after}$) (%)** | **$\Delta dL_z$ (%)** |
| **TPU 1** | **10.75** | **21.94** | **11.2** |
| **TPU 2** | **10.33** | **20.11** | **9.78** |
| **TPU 3** | **9.68** | **16.40** | **6.73** |

The creep resistance was also improved with an increasing extent of crosslinking. The lower the value of delta Lz better is the creep resistance. It was observed that with increasing crosslinking the delta Lz values dropped showing the effects of crosslinking. TPU 1 without the crosslinker showed a delta Lz value of 11.2 in comparison to TPU2 and TPU3 with crosslinker showing a value of 9.78 and 6.73.

Creep resistance was also measured for TPUs 1 to 3 according to Example 2 at elevated temperature at 100 °C, the results are shown in Table 4.

**Table 4**

| Creep resistance of TPUs 1 to 3 at 100 °C: | | | |
|---|---|---|---|
| **Material** | **dL ($t_{before}$) (%)** | **dL ($t_{after}$) (%)** | **$\Delta dL_z$ (%)** |
| **TPU 1** | **29.15** | | **Material flows could not be measured** |
| **TPU 2** | **24.06** | **97.59** | **85.3** |
| **TPU 3** | **29.63** | **115** | **73.4** |

The creep performance of the TPU 1 without any crosslinker started to flow at 100 °C without any crosslinker. In presence of the crosslinker, the material did not flow like liquid and recovers showing the effects of crosslinking.

**Short description of the Figure**

Fig. 1 shows the MFI of TPUs 1, 2 and 3 measured at different temperatures.

**Cited Literature**

[1] C. Lakatos et al., J. Appl. Polym. Sci. 2016, App. 44145;
[2] L. Irusta et al., J. Appl. Polym. Sci. 2016, App..44543;
[3] Kunststoffhandbuch, volume 7, Polyurethane", Carl Hanser Verlag, 3rd edition 1993, section 3.1;
[4] M. Edelson-Averbukh, A. Mandelbaum, J. Mass Spectrom. 2003, 38, 1169-1177;
[5] G.-W. Wang, Z.-X. Chen, Y. Murata, K. Komatsu, Tetrahedron2005, 61, 4851-4856.

## Claims

1. Thermoplastic polyurethane obtained or obtainable by reaction of at least the compounds (i) to (iv):

(i) a polyol composition comprising at least one polyol which has at least two functional hydroxyl groups reactive to isocyanate and which has within its structure at least one structural element according to formula (I)

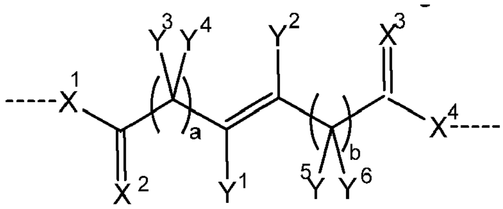

(I),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently a hydrogen atom or an electron withdrawing group;

(ii) a polyisocyanate composition;
(iii) a diene composition comprising at least one anthracene compound of general formula (II)

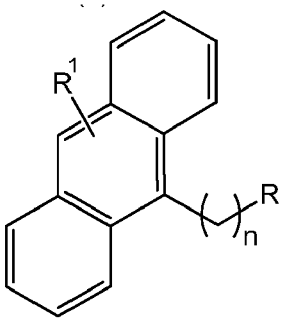

(II)

wherein n is an integer in the range of from 1 to 20; $R^1$ is selected from the group of hydrogen atom and C1 to C3 alkyl group; and
R represents either

- $-O-[C(=O)]_r-$ oligo- or polymer chain having at least two terminal functional groups $Z^1$ and $Z^2$, wherein r is zero or 1 and $Z^1$ and $Z^2$ are independently selected from the group consisting of methyl group, ethyl group, hydroxyl group, amino group, vinyl group, acryl group and isocyanate group;
or
- $-O-C(=O)-(CH_2)_m-C(=O)-O-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;
or
- $-NH-C(=O)-(CH_2)_m-C(=O)-NH-(CH_2)_{n'}-$anthracene ring having at least one substituent $R^2$ which is selected from the group of hydrogen atom and C1 to C3 alkyl group, wherein n' is an integer in the range of from 1 to 20 and m is an integer in the range of from 2 to 20;

(iv) optionally a chain extender composition comprising at least one diol;
(v) optionally a polyol composition comprising at least one polyol different from (i) and having two hydroxyl groups reactive towards isocyanate.

**2.** The thermoplastic polyurethane according to claim 1, wherein the at least one polyol of the polyol composition (i) which has within its structure at least one structural element according to formula (I) is obtained or obtainable by reaction of at least the compounds (i.1) and (i.2):

(i.1) a compound according to formula (III)

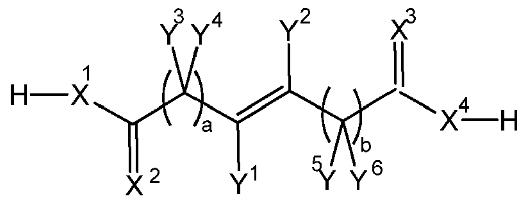

(III),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_p-OH$, wherein p is an integer in the range of from 2 to 10, preferably in the range of from 4 to 6.

**3.** The thermoplastic polyurethane according to claim 1 or 2, wherein the at least one polyol of the polyol composition (i) which has within its structure at least one structural element according to formula (I) is obtained or obtainable by reaction of at least the compounds (i.1), (i.2) and (i.3) and optionally (i.4):

(i.1) a compound according to formula (III)

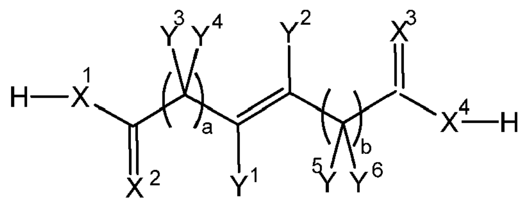

(III),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_{p1}-OH$, wherein $p_1$ is an integer in the range of from 2 to 10, preferably in the range of from 4 to 6;
(i.3) at least one saturated dicarboxylic acid $HOOC-(CH_2)_q-COOH$, wherein q is an integer in the range of from 1 to 20, preferably in the range of from 4 to 10, more preferably in the range of from 4 to 8, more preferably 6;
(i.4) optionally at least one further diol $HO-(CH_2)_p{}^2-OH$, wherein $p^2$ is an integer in the range of from 2 to 10, preferably in the range of from 4 to 6, wherein $p^2$ is not identical to $p^1$.

**4.** Thermoplastic polyurethane according to any of claims 1 to 3, wherein the anthracene compound of general formula (II) according to (iii) has the general formula (IIa)

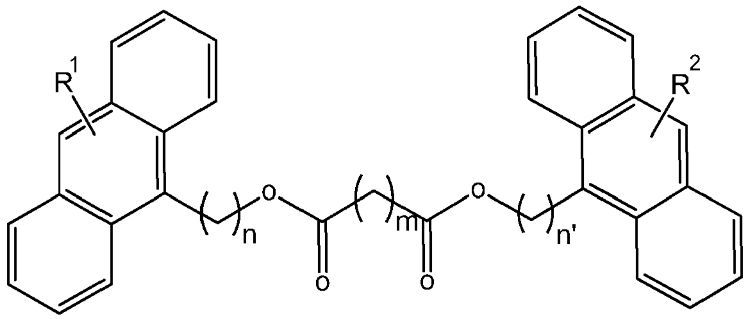
(IIa)

wherein n and n' are each independently an integer in the range of from 1 to 20, preferably in the range of from 1 to 5; m is an integer in the range of from 2 to 20, preferably in the range of from 2 to 10; and $R^1$ and $R^2$ are independently selected from the group of hydrogen atom and C1 to C3 alkyl group.

**5.** Thermoplastic polyurethane according to any of claims 1 to 3, wherein the anthracene compound of general formula (II) according to (iii) has the general formula (IIb)

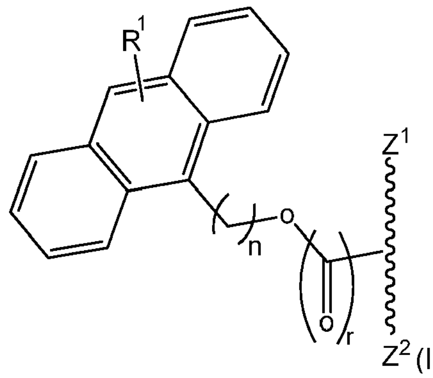
(IIb),

wherein

the sinous line represents an oligomeric chain or a polymeric chain comprising $-(CH_2)_s$-units, $-(CH_2-CH_2-O)_s$-units or $-(CH_2-CH_2-CH_2-O-)_s$- units, wherein s is an integer in the range of from 2 to 50;
$Z^1$ and $Z^2$ are independently selected from the group consisting of methyl group, ethyl group, hydroxyl group, amino group, vinyl group, acryl group and isocyanate group;
n is an integer in the range of from 1 to 20, preferably in the range of from 1 to 10;
r is zero or 1; and
$R^1$ is selected from the group of hydrogen atom and C1 to C3 alkyl group, wherein the anthracene compound of general formula (IIb) is preferably reactive or unreactive substrate reactive towards isocyanate or hydroxyl group and is preferably a meltable solid or a liquid with viscosity of 100-1900 mPas at 75°C.

**6.** Thermoplastic polyurethane according to any one of claims 1 to 5, obtained or obtainable by reaction of at least the compounds (i) to (iv):

(i) a polyol composition obtained or obtainable by reaction of at least the compounds (i.1) to (i.4):

(i.1) fumaric acid;
(i.2) 1,4-butane diol;
(i.3) adipic acid;
(i.4) 1,6-hexane diol;

(ii) a polyisocyanate composition comprising at least MDI;
(iii) a diene composition comprising at least bis(9-anthrylmethyl)-ester of succinic acid;
(iv) optionally a chain extender composition comprising at least 1,4-butane diol.

**7.** A polyol obtained or obtainable by reaction of at least the compounds (i.1) and (i.2):

(i.1) a compound according to formula (II)

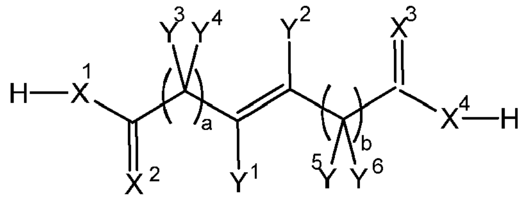

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group; ;

(i.2) at least one diol HO-$(CH_2)_p$-OH, wherein p is an integer in the range of from 2 to 10, preferably in the range of from 4 to 6.

**8.** The polyol according to claim 7, which is obtained or obtainable by reaction of at least the compounds (i.1), (i.2) and (i.3) and optionally (i.4):

(i.1) a compound according to formula (II)

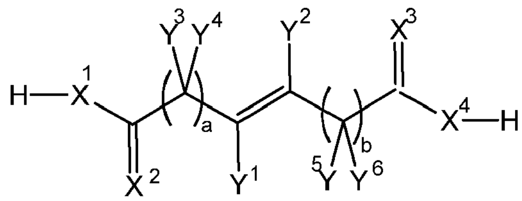

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol HO-$(CH_2)_{p1}$-OH, wherein $p^1$ is an integer in the range of from 2 to 10, preferably in the range of from 4 to 6;
(i.3) at least one saturated dicarboxylic acid HOOC-$(CH_2)_q$-COOH, wherein q is an integer in the range of from 1-20, preferably in the range of from 4 to 10, more preferably in the range of from 4 to 8, more preferably 6;
(i.4) optionally at least one further diol HO-$(CH_2)_p{}^2$-OH, wherein $p^2$ is an integer in the range of from 2 to 10, preferably in the range of from 4 to 6, wherein $p^2$ is not identical to $p^1$.

**9.** A method for preparation of a polyol by reacting at least the compounds (i.1) and (i.2)

(i.1) a compound according to formula (II)

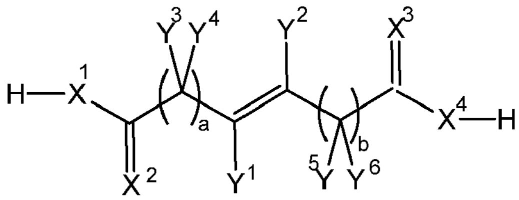

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_p-OH$, wherein p is an integer in the range of from 2 to 10, preferably in the range of from 4 to 6.

wherein (i.1) and (i.2) are reacted in the presence of at least one catalyst; optionally in the presence of at least one inert gas; optionally at a temperature in the range of from 100 to 250 °C; optionally at a pressure below 1 bar.

**10.** The method for preparation of a polyol according to claim 9, by reacting at least the compounds (i.1), (i.2) and (i.3) and optionally (i.4):

(i.1) a compound according to formula (II)

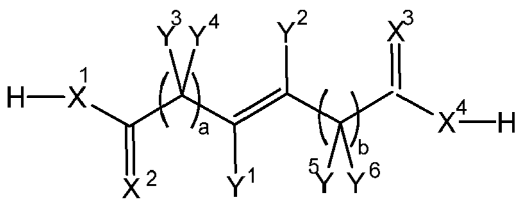

(II),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(i.2) at least one diol $HO-(CH_2)_{p1}-OH$, wherein $p^1$ is an integer in the range of from 2 to 10, preferably in the range of from 4 to 6;
(i.3) at least one saturated dicarboxylic acid $HOOC-(CH_2)_q-COOH$, wherein q is an integer in the range of from 1 to 20, preferably in the range of from 4 to 10, more preferably in the range of from 4 to 8, more preferably 6;
(i.4) optionally at least one further diol $HO-(CH_2)_p{}^2-OH$, wherein $p^2$ is an integer in the range of from 2 to 10, preferably in the range of from 4 to 6, wherein $p^2$ is not identical to $p^1$;

wherein (i.1), (i.2), (i.3) and optionally (i.4) are reacted in the presence of at least one catalyst; optionally in the presence of at least one inert gas; optionally at a temperature in the range of from 100 to 250 °C; optionally at a pressure below 1 bar.

**11.** The polyol obtained or obtainable according to the method of claim 9 or 10.

**12.** Use of the polyol according to claim 7 or 8 or of the polyol obtained or obtainable according to the method of claim 9 or 10 for the preparation of a thermoplastic polyurethane.

**13.** A method for preparation of a thermoplastic polyurethane by reacting at least the compounds (i) to (iv):

(i) a polyol composition comprising at least one polyol which has at least two functional hydroxyl groups reactive to isocyanate and which has within its structure at least one structural element according to formula (I)

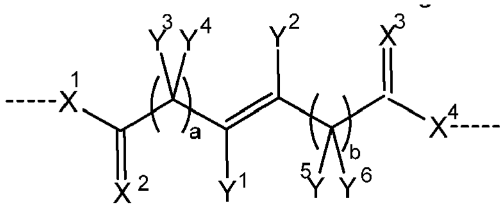

(I),

wherein

$X^1$, $X^2$, $X^3$ and $X^4$ are independently selected from the group of heteroatoms, preferably from the group consisting of oxygen atom, sulfur atom and nitrogen atom, optional with further substituents at the heteroatom, which are preferably selected from hydrogen atom and C1 to C3 alkyl group;
a and b are independently zero or an integer in the range of from 1 to 10;
$Y^1$ to $Y^6$ are independently hydrogen atom or an electron withdrawing group;

(ii) a polyisocyanate composition;
(iii) a diene composition comprising at least one anthracene compound of general formula (II)

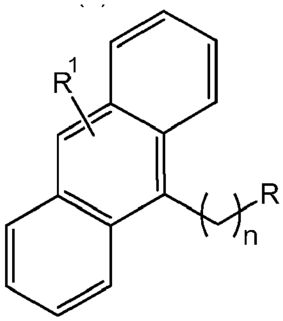

(II)

wherein n is an integer in the range of from 1 to 20; $R^1$ is selected from the group of hydrogen atom and C1 to C3 alkyl group; and
R represents either

- -O-[C(=O)]$_r$- oligo- or polymer chain having at least two terminal functional groups $Z^1$ and $Z^2$, wherein r is zero or 1 and $Z^1$ and $Z^2$ are independently selected from the group consisting of methyl group, ethyl group, hydroxyl group, amino group, vinyl group, acryl group and isocyanate group;
or
- -O-C(=O)-$(CH_2)_m$-C(=O)-O-$(CH_2)_{n'}$-anthracene ring having at least one substituent $R^2$ which is selected from the group of hydrogen atom and C1 to C3 alkyl group, wherein n' is an integer in the range of from 1 to 20 and m is an integer in the range of from 2 to 20;
or
- -NH-C(=O)-$(CH_2)_m$-C(=O)-NH-$(CH_2)_{n'}$-anthracene ring having at least one substituent $R^2$ which is selected from the group of hydrogen atom and C1 to C3 alkyl group, wherein n' is an integer in the range of from 1 to 20 and m is an integer in the range of from 2 to 20;

(iv) optionally a chain extender composition comprising at least one diol;
(v) optionally a polyol composition comprising at least one polyol different from (i) and having two hydroxyl groups reactive towards isocyanate.

**14.** The thermoplastic polyurethane obtained or obtainable according to the method of claim 13.

**15.** Use of the thermoplastic polyurethane according to any one of claims 1 to 6 or of the thermoplastic polyurethane obtained or obtainable according to the method of claim 13 for the preparation of a molded article, an injection molded article, an extrusion article, or a foil.

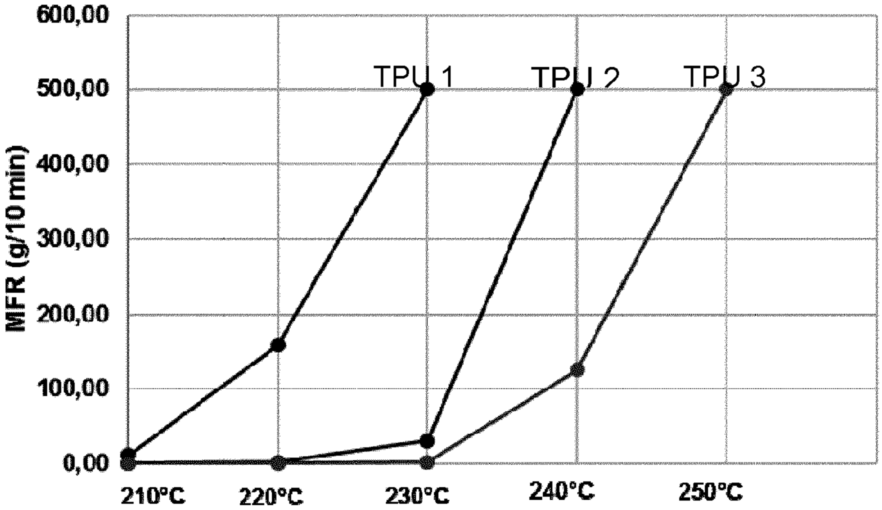
600,00
500,00
400,00
300,00
200,00
100,00
0,00
MFR (g/10 min)
TPU 1
TPU 2
TPU 3
210°C
220°C
230°C
240°C
250°C

Fig 1

Europäisches Patentamt
European Patent Office
Office européen des brevets

# EUROPEAN SEARCH REPORT

Application Number
EP 18 19 8618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 734 939 B2 (HENKEL) 27 May 2014 (2014-05-27) * claim 5; compound b * | 1-15 | INV. C08G18/76 C08G18/10 C08G18/42 C08G18/67 |
| A | CSILLA LAKATOS ET AL: "Shape memory crosslinked polyurethanes containing thermoreversible Diels-Alder couplings : ARTICLE", JOURNAL OF APPLIED POLYMER SCIENCE, vol. 133, no. 43, 15 November 2016 (2016-11-15), XP055531048, US ISSN: 0021-8995, DOI: 10.1002/app.44145 * figure 1 * | 1-15 | |

TECHNICAL FIELDS SEARCHED (IPC)

C08G

The present search report has been drawn up for all claims

1

| Place of search | Date of completion of the search | Examiner |
|---|---|---|
| Munich | 18 March 2019 | Buestrich, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 18 19 8618

This annex lists the patent family members relating to the patent documents cited in the above-mentioned European search report. The members are as contained in the European Patent Office EDP file on The European Patent Office is in no way liable for these particulars which are merely given for the purpose of information.

18-03-2019

| Patent document cited in search report | Publication date | Patent family member(s) | Publication date |
| --- | --- | --- | --- |
| US 8734939 B2 | 27-05-2014 | AU 2010260018 A1 | 15-12-2011 |
| | | BR PI1010733 A2 | 15-03-2016 |
| | | CN 102803416 A | 28-11-2012 |
| | | EP 2440627 A2 | 18-04-2012 |
| | | ES 2539184 T3 | 26-06-2015 |
| | | JP 5759987 B2 | 05-08-2015 |
| | | JP 2012530150 A | 29-11-2012 |
| | | KR 20120029421 A | 26-03-2012 |
| | | US 2012082840 A1 | 05-04-2012 |
| | | WO 2010144774 A2 | 16-12-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **C. LAKATOS et al.** *J. Appl. Polym. Sci.,* 2016
- **L. IRUSTA et al.** *J. Appl. Polym. Sci.,* 2016
- Kunststoffhandbuch. Polyurethane. Carl Hanser Verlag, 1993, vol. 7
- **M. EDELSON-AVERBUKH ; A. MANDELBAUM.** *J. Mass Spectrom.,* 2003, vol. 38, 1169-1177
- **G.-W. WANG ; Z.-X. CHEN ; Y. MURATA ; K. KOMATSU.** *Tetrahedron,* 2005, vol. 61, 4851-4856